# EUROPÄISCHE PATENTSCHRIFT

(11) **EP 2 331 625 B1**
(45) Veröffentlichungstag und Bekanntmachung des Hinweises auf die Patenterteilung: **18.01.2012**
(21) Anmeldenummer: 09782635.8
(22) Anmeldetag: 04.09.2009
(51) Int. Cl.: C08K 5/5317, C08K 5/5357, C08K 5/00, C08K 5/3492

(54) **FLAMMSCHUTZZUSAMMENSETZUNG ENTHALTEND EIN PHOSPHONSÄUREDERIVAT**
FLAME-RETARDANT COMPOSITION COMPRISING A PHOSPHONIC ACID DERIVATIVE
COMPOSITION RETARDATRICE DE FLAMME RENFERMANT UN DÉRIVÉ DE L'ACIDE PHOSPHONIQUE

(30) Priorität: 05.09.2008 EP 08163790
(43) Veröffentlichungstag der Anmeldung: 15.06.2011
(73) Patentinhaber: THOR GmbH, 67346 Speyer (DE)
(72) Erfinder: BUTZ, Volker, 67434 Neustadt/Weinstraße (DE)
(86) Internationale Anmeldenummer: PCT/EP2009/061489
(87) Internationale Veröffentlichungsnummer: WO 2010/026230

(56) Entgegenhaltungen:
- EP-A- 0 617 079
- EP-A- 0 889 085
- WO-A-2005/113661
- US-B1- 6 410 621

## Beschreibung

Die vorliegende Erfindung betrifft eine flammhemmende Zusammensetzung, die ein synergistisches Flammschutzmittelgemisch enthält, sowie ein Verfahren zum Flammverzögern eines Polymersubstrats durch Zugabe dieser flammhemmenden Zusammensetzung. Ferner betrifft die Erfindung Polymere, die diese flammhemmende Zusammensetzung enthalten.

Polymere werden heutzutage häufig dadurch flammwidrig ausgerüstet, indem man diesen phosphorhaltige oder halogenhaltige Verbindungen oder Gemische davon zusetzt. Auch Gemische von phosphor- und stickstoffhaltigen Verbindungen werden derzeit oft als Flammhemmer verwendet. Ein hiermit einhergehendes Problem ist zumeist ein zu schwacher Flammschutzeffekt oder eine zu geringe thermische Stabilität des resultierenden ausgerüsteten Kunststoffes.

Weiterhin haben sich Salze von Phosphinsäuren als wirksame flammhemmende Zusätze für Polymere erwiesen, hierbei werden sowohl Alkalimetallsalze (DE-A 2 252 258) als auch Salze anderer Metalle (DE-A 2 447 727) verwendet. Dieser flammhemmenden Zusätze führen zu einer geringen Veränderung der thermischen Eigenschaften des Kunststoffes, weisen jedoch noch immer eine zu geringe flammhemmende Wirkung auf.

Der Markt für Flammschutzmittel umfasst derzeit Produkte, die so wirken, dass sie jeden Verbrennungsvorgang durch chemische und/oder physikalische Vorgänge stören. Es wurde dabei gezeigt, dass diese Mittel während der Verbrennung eines Gegenstandes in entweder der Gasphase, der kondensierten Phase oder in beiden Phasen wirken. Hierbei wird angenommen, dass beispielsweise organische Halogenformen (wie beispielsweise Decabromdiphenyloxid, Hexabromcyclodecan (HBCD), Tetrabrombisphenol A) Halogenwasserstoff (HX) erzeugen, die in der Gasphase mit freiem radikalischem organischem "Brennstoff" von dem Polymersubstrat in Wechselwirkung treten. Synergisten zur Umsetzung mit HX wurden vorgeschlagen, um zusätzliche chemische Spezies zu bilden, die die Verbrennung in der Gasphase stören, wie eine Reaktion von Antimonoxid mit HX, um Antimonhalogenid und Wasserstoff zu generieren. Antimonverbindungen wie Antimontrioxid wirken in Kombination mit Halogenverbindungen auch als Radikalfänger. Somit kann die Ausbreitung des Brandes gehemmt werden. Obwohl Antimon- und die typischen Halogenverbindungen hinsichtlich der Kostenleistung effizient sind, kam in letzter Zeit eine Vielzahl von Befürchtungen aufgrund der Toxizität der gebildeten Nebenprodukte, die sich während der Verbrennung in Gegenwart von einem halogenierten Flammschutzmittel bilden, auf Antimonoxide enthalten darüber hinaus häufig Spurenmengen an Arsenverbindungen, die unter dem Verdacht stehen, krebserzeugend zu sein. Aufgrund dieser Nachteile dieser Verbindungen gibt es derzeit Bestrebungen, Antimontrioxid und Bromverbindungen in den derzeitigen kommerziellen Flammschutzanwendungen zu ersetzen. Jedoch ist es sehr schwierig, ein Ersatz-Flammschutzmittel zur Verfügung zu stellen, welches nicht nur umweltfreundlich, sondern auch hochwirksam ist.

Ein weiterer Grund, flammhemmende Zusammensetzungen den Polymeren hinzuzugeben, besteht darin, das Herabtropfen von Teilen des Polymers in Form von Tröpfchen unter der Einwirkung von Feuer zu verhindern. Sehr häufig brennen diese Tröpfchen selbst und stellen eine große Gefahr hinsichtlich der Ausbreitung eines Brandes dar. Es ist daher eine übliche Maßnahme, Füllstoffe wie Talkum in großen Mengen dem Polymer zuzusetzen, was mit gewissen Nachteilen hinsichtlich der mechanischen Eigenschaften des Polymers verbunden ist. Die verwendeten Füllstoffe schließen dabei Calciumcarbonat, Magnesiumcarbonat, Zinkborat, Silikate, Silikone, Glasfasern, Glaskügelchen, Asbest, Kaolin, Bariumsulfat, Calciumsulfat, Metalloxide, Hydride und Hydroxide, wie Zinkoxid, Magnesiumhydroxid, Aluminiumoxidtrihydrat, Siliziumdioxid, Calciumsilikat und Magnesiumsilikate ein.

Eine Druckschrift, die sich mit der Verwendung von Diphosphonaten als flammhemmende Verbindungen beschäftigt, ist die US 4,174,343. In diesem Dokument wird eine Vielzahl von Diphosphonaten offenbart, die in unterschiedlichen Polymeren und Copolymeren flammhemmende Eigenschaften haben sollen.

Ferner werden in jüngster Zeit auch gehinderte Amine, die seit langem als Licht- und/oder als thermische Stabilisatoren für eine Vielzahl von organischen Materialien, die gegen durch Sauerstoff, Wärme und aktinisches Licht induzierten Abbau anfällig sind, als flammhemmende Mittel diskutiert. Hierbei handelt es sich insbesondere um verschiedene N-Kohlenwasserstoff oxisubstituierte gehinderte Amine (sogenannte NR-gehinderte Amine). In der DE-T 69826477 werden beispielsweise derartige NR-gehinderte Amine diskutiert, die nicht nur UV-stabilisierende, sondern auch flammverzögernde Eigenschaften haben sollen.

Im Lichte des Standes der Technik besteht die der Erfindung zugrundeliegende Aufgabe darin, eine weitere hoch wirksame und thermisch stabile flammhemmende Zusammensetzung zur Verfügung zu stellen. Die Komponenten der erfindungsgemäßen flammhemmenden Zusammensetzung sollen dabei die thermische Verarbeitbarkeit eines flammschutzausgerüsteten Kunststoffes auch bei hohen Temperaturen im Bereich von etwa 250 bis 300 °C nicht nachteilig beeinflussen. Ferner sollen die Komponenten dieser flammhemmenden Zusammensetzungen synergistisch zusammenwirken und deshalb beim gleichzeitigen Einsatz in geringeren Konzentrationen verwendet werden können, verglichen mit den nötigen Konzentrationen im Falle der Einzelkomponenten. Weiterhin soll die erfindungsgemäße flammhemmende Zusammensetzung frei von organischen Halogenverbindungen und Schwermetallen sein, wodurch die Exposition von toxischen Stoffen vermieden wird.

Diese Aufgabe löst die Erfindung durch ein Gemisch bzw. durch eine flammhemmende Zusammensetzung, enthaltend eine synergistische Mischung von (A) und (B) mit den nachfolgenden Bedeutungen:
(A) ist eine Verbindung oder ein Gemisch von 2 oder mehreren Verbindungen der Gruppen
   a) einer oder mehrerer Phosphonatverbindung(en) der Formel 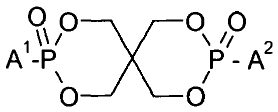 worin A¹ und A² unabhängig voneinander eine substituierte oder nicht substituierte, geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen,
   c) Alkyl- oder Aryl-Phosphonsäuren, wobei Alkyl- eine geradkettige oder Verzweigte Alkylgruppe mit 1 bis 4 Kohlenstoffatomen, und Aryl- ein substituiertes oder nicht substituiertes Benzyl, substituiertes oder nicht substituiertes Phenyl, substituiertes oder nicht substituiertes Naphthyl darstellt, sowie ein Salz beziehungsweise Ester der vorstehend genannten Phosphonsäure, und
(B) eine 1,3,5-Triazinverbindung oder ein Gemisch von zwei oder mehreren 1,3,5-Triazinverbindung(en) ausgewählt aus Tris-2-hydroxyethylisocyanurat, Melamin, Melamincyanurat, Melaminphosphat, Poly-[2,4-(piperazin-1,4-yl)-6-(morpholin-4-yl)-1,3,5-triazin], Dimelaminphosphat, Melaminpyrophosphat, und gehinderten Aminverbindungen der Formeln I, II, IIA und III:

   R₁NH-CH₂CH₂CH₂NR₂CH₂CH₂NR₃CH₂CH₂CH₂NHR₄ (I)

   T-E₁-T₁ (II)

   T-E₁ (IIA)

   G-E₁-G₁-E₁-G₂ (III),

   wobei in dem Tetraamin der Formel I
   R₁ und R₂ die s-Triazineinheit E darstellen, und einer von R₃ und R₄ die s-Triazineinheit E darstellt, wobei der andere von R₃ und R₄ Wasserstoff darstellt,
E 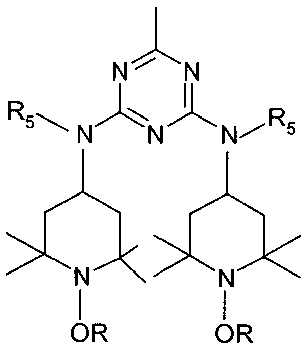 darstellt,
   R Methyl, Cyclohexyl oder Octyl darstellt,
   R₅ Alkyl mit 1 bis 12 Kohlenstoffatomen darstellt,
   worin in der Verbindung der Formel II oder IIA, wenn R Cyclohexyl oder Octyl darstellt,
   T und T₁ jeweils ein Tetraamin substituiert mit R₁-R₄ wie für Formel I definiert, darstellen, worin
   (1) eine von den s-Triazineinheiten E in jedem Tetraamin durch die Gruppe E₁ ersetzt ist, die eine Brüche zwischen zwei Tetraaminen T und T₁ bildet, oder
   (2) die Gruppe E₁ beide Enden im Gleichen Tetraamin T aufweisen kann, wie in der Formel IIA, bei der zwei der E-Reste des Tetraamins durch eine E₁-Gruppe ersetzt sind, oder
   (3) sämtliche drei s-Triazinsubstituenten des Tetraamins T E₁ bedeuten können, so dass ein Rest E₁ die Verbindung zwischen T und T₁ herstellt und der zweite Rest E₁ beide Enden im Tetraamin T aufweist, und
E₁ 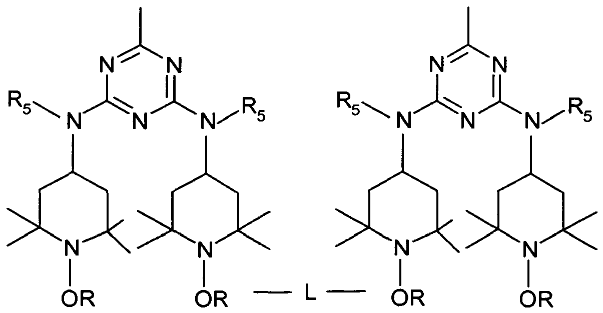 darstellt.

Das Gemisch kann dabei selbst bereits eine flammhemmende Zusammensetzung sein oder in Kombination mit weiteren, nachfolgend genannten Bestandteilen eine flammhemmende Zusammensetzung bilden.

Gemäß einer allgemeinen Ausführungsform der Erfindung kann es sich bei der Komponente (B) um eine oder mehrere 1,3,5-Triazinverbindung(en) ausgewählt aus Tris-2-hydroxyethylisocyanurat, Melamin, Melamincyanurat, Melaminphosphat, Poly-[2,4-(piperazin-1,4-yl)-6-(morpholin-4-yl)-1,3,5-triazin], Dimelaminphosphat, Melaminpyrophosphat, und gehinderten Aminverbindungen der Formel I, II, III, IV, V, VI, VII, VIII, IX, X oder XI 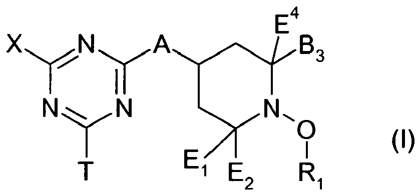 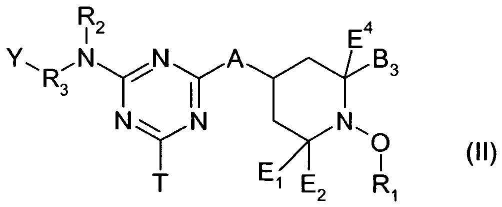 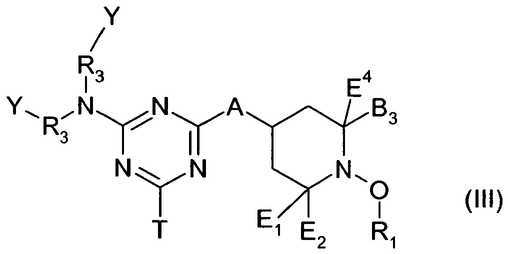 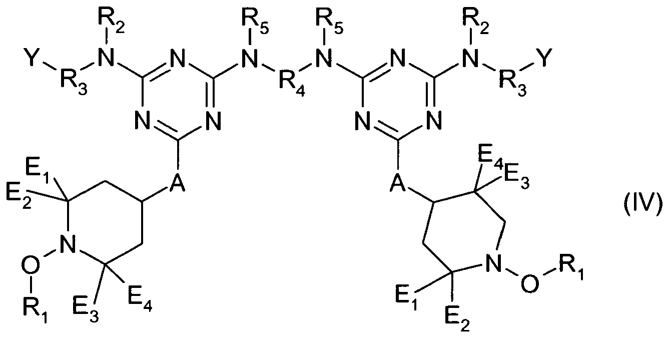 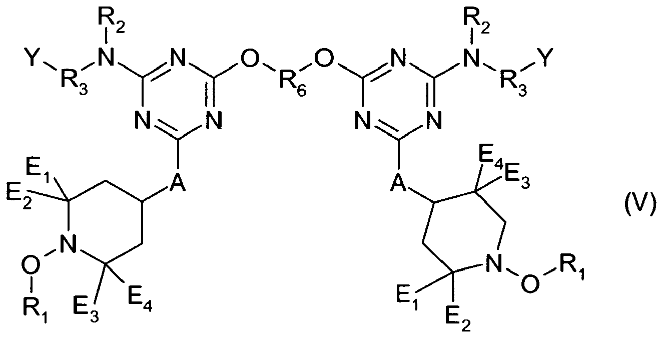 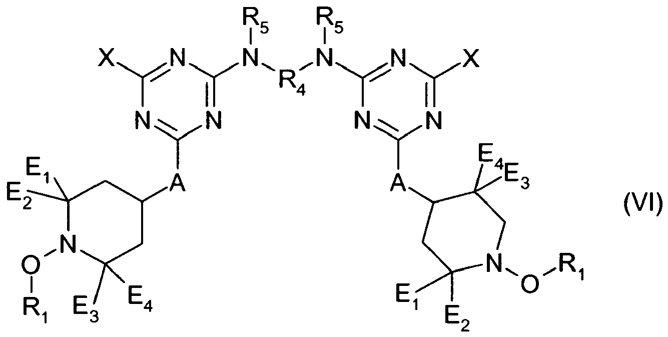 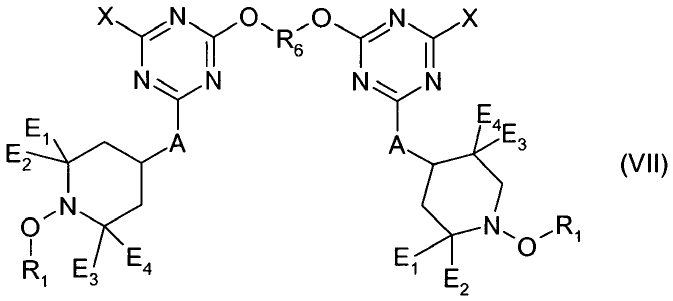 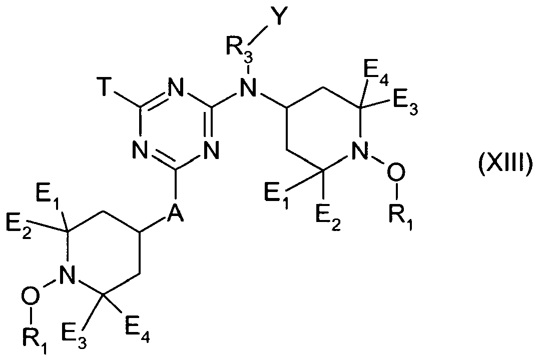 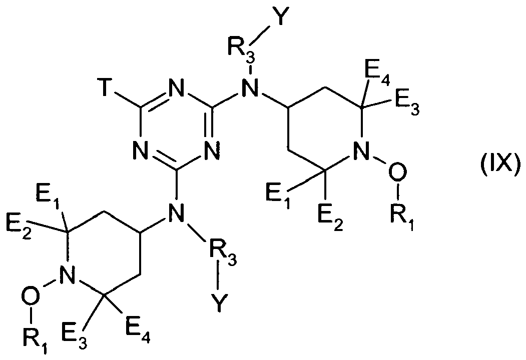 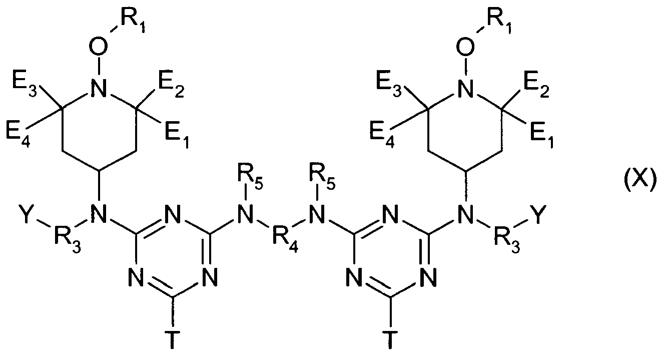 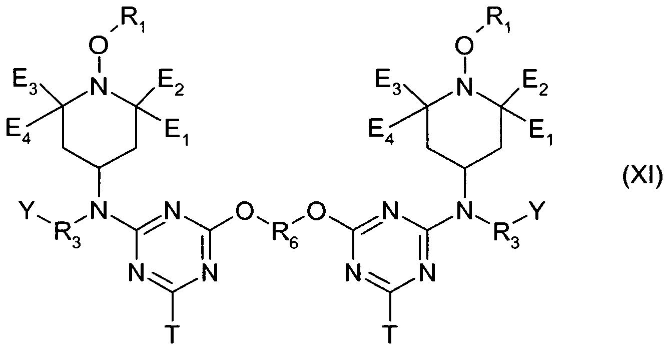 handeln, worin bei Vorliegen eines Gemisches in (A) die Komponenten des Gemisches aus einigen, 2 oder 3 Verbindungen der Gruppe (a), (b) und (c) ausgewählt sein können, und wobei die Symbole die folgende Bedeutung haben:

E₁, E₂, E₃ und E₄ unabhängig geradkettiges oder verzweigtes Alkyl mit 1 bis 4 Kohlenstoffatomen darstellen oder E₁ und E₂ unabhängig Alkyl mit 1 bis 4 Kohlenstoffatomen darstellen und E₃ und E₄ zusammengenommen Pentamethylen darstellen oder E₁ und E₂ und E₃ und E₄ jeweils zusammengenommen Pentamethylen darstellen,
R₁ geradkettiges oder verzweigtes Alkyl mit 1 bis 18 Kohlenstoffatomen, Cycloalkyl mit 5 bis 12 Kohlenstoffatomen, einen bicyclischen oder tricyclischen Kohlenwasserstoffrest mit 7 bis 12 Kohlenstoffatomen, Phenylalkyl mit 7 bis 15 Kohlenstoffatomen, Aryl mit 6 bis 10 Kohlenstoffatomen oder das Aryl substituiert mit 1 bis 3 Alkyl mit 1 bis 8 Kohlenstoffatomen darstellt,
R₂ Wasserstoff oder ein lineares oder verzweigtkettiges Alkyl mit 1 bis 12 Kohlenstoffatomen darstellt,
R₃ Alkylen mit 1 bis 8 Kohlenstoffatomen oder -C(O)-, -C(O)-R₄-, -C(O)NR₂- oder - C(O)-NR₂-R₄ darstellt,
R₄ Alkylen mit 1 bis 8 Kohlenstoffatomen darstellt,
R₅ Wasserstoff, ein lineares oder verzweigtkettiges Alkyl mit 1 bis 12 Kohlenstoffatomen oder 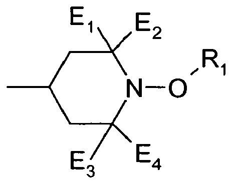 darstellt
oder wenn R₄ Ethylen darstellt, zwei R₅ Methylsubstituenten durch eine direkte Verbindung verbunden sein können, so dass die Triazinbrückengruppe -N(R₅)-R₄-N(R₅)-eine Piperazin-1,4-diyleinheit darstellt,
R₆ Alkylen mit 2 bis 8 Kohlenstoffatomen darstellt oder R₆ 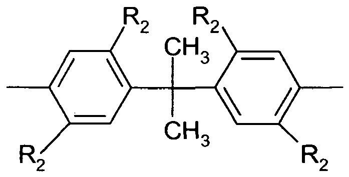 darstellt,
mit der Maßgabe, dass Y nicht -OH darstellt, wenn R₆ die vorstehend angeführte Struktur darstellt,
A -O- oder -NR₇- darstellt, worin R₇ Wasserstoff, ein gerad- oder verzweigtkettiges Alkyl mit 1 bis 12 Kohlenstoffatomen darstellt, oder R₇ 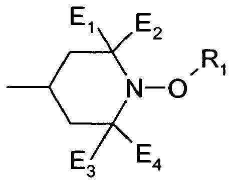 darstellt,
T Phenoxy, Phenoxy substituiert mit einer oder zwei Alkylgruppen mit 1 bis 4 Kohlenstoffatomen, Alkoxy mit 1 bis 8 Kohlenstoffatomen oder -N(R₂)₂ darstellt mit der Bedingung, dass R₂ nicht Wasserstoff darstellt, oder T 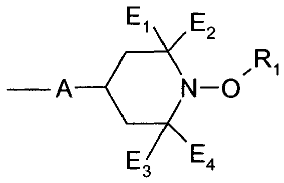 darstellt,
X -NH₂, -NCO, -OH, -O-Glycidyl oder -NHNH₂ darstellt, und
Y -OH, -NH₂, -NHR₂ darstellt, worin R₂ nicht Wasserstoff darstellt; oder Y -NCO, - COOH, Oxiranyl, -O-Glycidyl oder -Si(OR₂)₃ darstellt; oder die Kombination R₃-Y-CH₂CH(OH)R₂ darstellt, worin R₂ Alkyl oder das Alkyl, unterbrochen durch ein bis vier Sauerstoffatome, darstellt oder R₃-Y-CH₂-OR₂ darstellt;
oder
worin die gehinderte Aminverbindung ein Gemisch von N,N',N"'-Tris{2,4-bis[(1-kohlenwasserstoffoxy-2,2,6,6-tetramethylpiperidin-4-yl)alkylamino]-s-triazin-6-yl}-3,3'-ethylendiiminodipropylamin;
N,N',N"-Tris {2,4-bis[(1-kohlenwasserstoffoxy-2,2,6,6-tetramethylpiperidin-4-yl)alkylamino]-s-triazin-6-yl}-3,3'-ethylendiiminodipropylamin und verbrückten Derivaten, wie durch die Formeln I, II, IIA und III beschrieben,

R₁NH-CH₂CH₂CH₂NR₂CH₂CH₂NR₂CH₂CH₂CH₂NHR₄ (I)

T-E₁-T₁ (II)

T-E₁ (IIA)

G-E₁-G₁-E₁-G₂ (III)

darstellt, wobei in dem Tetraamin der Formel I
R₁ und R₂ die s-Triazineinheit E darstellen, und einer von R₃ und R₄ die s-Triazineinheit E darstellt, wobei der andere von R₃ und R₄ Wasserstoff darstellt,

E 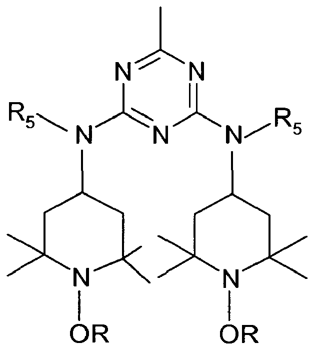 darstellt,
R Methyl, Propyl, Cyclohexyl oder Octyl darstellt,
R₅ Alkyl mit 1 bis 12 Kohlenstoffatomen darstellt,
worin in der Verbindung der Formel II oder IIA, wenn R Propyl, Cyclohexyl oder Octyl darstellt,
T und T₁ jeweils ein Tetraamin substituiert mit R₁-R₄ wie für Formel I definiert, darstellen, worin
(1) eine von den s-Triazineinheiten E in jedem Tetraamin durch die Gruppe E₁ ersetzt ist, die eine Brüche zwischen zwei Tetraaminen T und T₁ bildet,
   E₁ 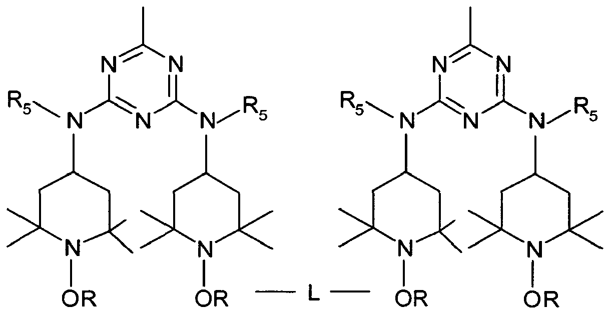 darstellt
   oder
(2) die Gruppe E₁ beide Enden in dem gleichen Tetraamin T wie in Formel IIA aufweisen kann, worin zwei von den Einheiten E des Tetraamins ersetzt sind durch eine Gruppe E₁, oder
(3) alle drei s-Triazinsubstituenten von Tetraamin T E₁ sein können, so dass ein E₁ T und T₁ verbindet und das zweite E₁ beide Enden in Tetraamin T aufweist;
   L Propandiyl, Cyclohexandiyl oder Octandiyl darstellt;
   worin in der Verbindung der Formel III
   G, G₁ und G₂ jeweils Tetraamine, substituiert mit R₁-R₄ wie für Formel I definiert, darstellen, mit der Ausnahme, dass G und G₂ jeweils eine von den s-Triazineinheiten E, ersetzt durch E₁, aufweisen und G₁ zwei von den Triazineinheiten E, ersetzt durch E₁, aufweisen, so dass es eine Brücke zwischen G und G₁ und eine zweite Brücke zwischen G₁ und G₂ gibt;
   wobei das Gemisch hergestellt wird durch Umsetzen von zwei bis vier Äquivalenten 2,4-Bis[(1-kohlenwasserstoffoxy-2,2,6,6-tetramethylpiperidin-4-yl)butylamino)-6-chlor-s-triazin mit einem Äquivalent N,N'-Bis(3-aminopropyl)ethylendiamin;
   oder das gehinderte Amin eine Verbindung der Formel IIIb 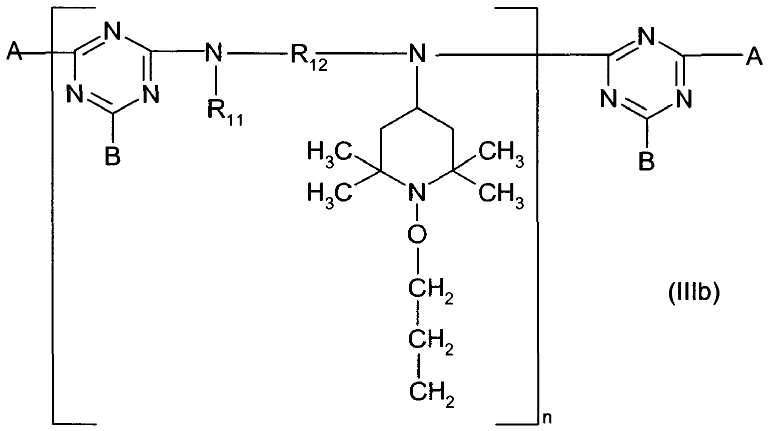 darstellt, worin der Index n im Bereich von 1 bis 15 liegt;
   R₁₂ C₂-C₁₂-Alkylen, C₄-C₁₂-Alkenylen, C₅-C₇-Cycloalkylen, C₆-C₇-Cycloalkylen-di(C₁-C₄-alkylen), C₁-C₄-Alkylendi(C₅-C₇-cycloalkylen), Phenylendi(C₁-C₄-alkylen) oder C₄-C₁₂-Alkylen, unterbrochen durch 1,4-Piperazindiyl, -O- oder >N-X₁, darstellt, wobei X₁ C₁-C₁₂-Acyl oder (C₁-C₁₂-Alkoxy)carbonyl darstellt oder eine der für R₁₄ nachstehend angegebenen Definitionen mit der Ausnahme von Wasserstoff aufweist; oder R₁₂ eine Gruppe der Formel (Ib') oder (Ic') darstellt; 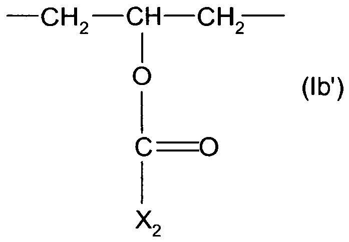 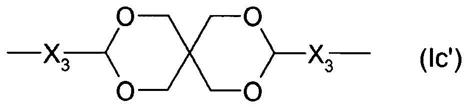 wobei m 2 oder 3 ist,
   X₂ C₁-C₁₈-Alkyl, C₅-C₁₂-Cycloalkyl, das unsubstituiert oder mit 1, 2 oder 3 C₁-C₄-Alkyl substituiert ist; Phenyl, das unsubstituiert oder mit 1, 2 oder 3 C₁-C₄-Alkyl oder C₁-C₄-Alkoxy substituiert ist, C₇-C₉-Phenylatkyl, das unsubstituiert oder an dem Phenyl mit 1,2 oder 3 C₁-C₄-Alkyl substituiert ist, darstellt, und
   die Reste X₃ unabhängig voneinander C₂-C₁₂-Alkylen darstellen;
   R₁₃, R₁₄ und R₁₅, die gleich oder verschieden sind, Wasserstoff, C₁-C₁₈-Alkyl, C₅-C₁₂-Cycloalkyl, das unsubstituiert oder mit 1, 2 oder 3 C₁-C₄-Alkyl substituiert ist; C₃-C₁₈-Alkenyl, Phenyl, das unsubstituiert oder mit 1,2 oder 3 C₁-C₄-Alkyl oder C₁-C₄-Alkoxy substituiert ist; C₇-C₉-Phenylalkyl, das unsubstituiert oder an dem Phenyl mit 1, 2 oder 3 C₁-C₄-Alkyl substituiert ist; Tetrahydrofurfuryl oder C₂-C₄-Alkyl, das in der 2-, 3- oder 4-Position mit -OH, C₁-C₈-Alkoxy, Di(C₁-C₄-alkyl)amino oder einer Gruppe der Formel (Ie') 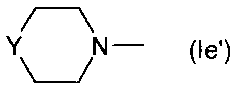 substituiert ist, wobei Y -O-, -CH₂-, -CH₂CH₂- oder >N-CH₃ darstellt, darstellen; oder -N(R₁₄)(R₁₅) zusätzlich eine Gruppe der Formel (Ie') darstellt;
   die Reste A unabhängig voneinander -OR)₁₃, -N(R₁₄)(R₁₅) oder eine Gruppe der Formel (IIId) darstellen; 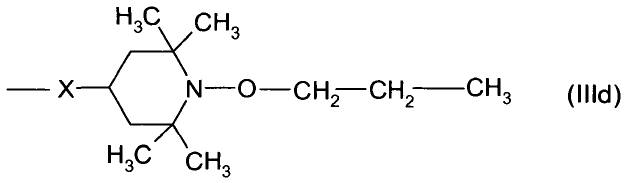 X -O- oder >N-R₁₆ darstellt,
   R₁₈ Wasserstoff, C₁-C₁₈-Alkyl, C₃-C₁₈-Alkenyl, C₅-C₁₂-Cycloalkyl, das unsubstituiert oder mit 1, 2 oder 3 C₁-C₄-Alkyl substituiert ist; C₇-C₉-Phenylalkyl, das unsubstituiert oder an dem Phenyl mit 1, 2 oder 3 C₁-C₄-Alkyl substituiert ist; Tetrahydrofurfuryl, eine Gruppe der Formel (IIIt), 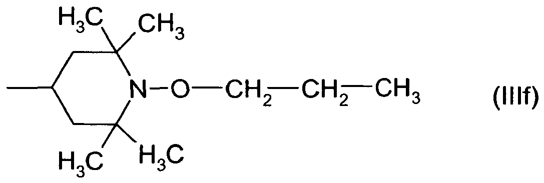 oder C₂-C₄-Alkyl, das in der 2-, 3- oder 4-Position mit -OH, C₁-C₆-Alkoxy, Di(C₁-C₄-alkyl)amino oder einer Gruppe der Formel (Ie') substituiert ist, darstellt;
   R₁₁ eine der vorstehend für R₁₆ angegebene Definitionen aufweist; und
   die Reste B unabhängig voneinander eine der für A angegebenen Definitionen aufweisen.

Im Zusammenhang mit der vorliegenden Erfindung haben die in den nachfolgenden Definitionen genannten Substituentendie folgende Bedeutung:
Alkyl ist geradkettig oder verzweigt und ist zum Beispiel Methyl, Ethyl, i-Propyl, n-Propyl, n-Butyl, sek-Butyl, tert.-Butyl, n-Hexyl, n-Octyl, 2-Ethylhexyl, n-Nonyl, n-Decyl, n-Undecyl, n-Dodecyl, n-Tridecyl, n-Tetradecyl, n-Hexydecyl oder n-Octadecyl.
Cycloalkylgruppen schließen Cyclopentyl und Cyclohexyl ein; typische Cycloalkylgruppen schließen Cyclohexyl ein.
Gemäß einer allgemeinen Ausführungsform der Erfindung ist die eine oder sind die mehreren Phosphonatverbindung(en) der Komponente (A) eine oder mehrere Phosphonatverbindung(en) der Formel 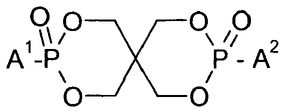 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen. Gemäß einer Ausführungsform der Erfindung kann die Alkylgruppe eine Haloalkylgruppe sein, die mit einem, zwei oder drei Halogenatomen ausgewählt aus Chlor und Brom substituiert ist. Ferner kann diese eine Phenyl oder durch Halogen substituierte Phenylgruppe, wie 4-Chlorphenyl, 2,4-Dichlorphenyl, 2,4,6-Trichlorphenyl, 4-Bromphenyl, 2,4-Dibromphenyl oder 2,4,6-Tribromphenyl sein. Weiterhin können A¹ und A² unabhängig voneinander Phenylalkyl mit 7 bis 9 Kohlenstoffatomen oder Phenylalkenyl mit 8 bis 10 Kohlenstoffatomen, das im Alkylrest substituiert sein kann, bedeuten. Weitere Phosphonatverbindungen der vorstehenden Formel werden in dem US Patent US 4,174,343 und in der DE 26 30 693 offenbart, welche durch Bezugnahme in die Offenbarung der vorliegenden Erfindung eingeschlossen sind.

Gemäß einer weiteren bevorzugten Ausführungsform der Erfindung ist die in der flammhemmenden Zusammensetzung enthaltene Phosphonatverbindung (A), eine Verbindung der nachfolgenden Strukturformel 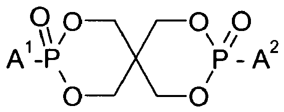 worin A¹ und A² unabhängig voneinander Alkyl mit 1 bis 4 Kohlenstoffatomen, bevorzugt eine Methylgruppe, eine Ethylgruppe und/oder eine Propylgruppe, besonders bevorzugt Alkyl mit 1 bis 2 Kohlenstoffatomen und am meisten bevorzugt eine Methylgruppe ist. Besonders bevorzugt handelt es sich bei der Phosphonatverbindung um das Dimethylspirophosphonat, bei dem die Substituenten A¹ und A² der vorstehend gezeigten Formel Methylgruppen sind.

Gemäß einer weiteren bevorzugten Ausführungsform der Erfindung ist die in dem Gemisch bzw. der flammhemmenden Zusammensetzung enthaltene Phosphonatverbindung eine Alkylphosphonsäure, besonders bevorzugt eine Methanphosphonsäure, Ethanphosphonsäure, Propanphosphonsäure oder ein Derivat davon, wie ein Salz bzw. Ester davon. Das Salz kann dabei ein Ammoniumsalz, Guanidiniumsalz, DCDA, Guanylhamstoff, Melamin, Ethylendiamin oder Piperazinsalz sein. Liegt die Methanphosphonsäure in Form ihres Esters vor, so kann dies ein Alkylester mit 1 bis 3 Kohlenstoffatomen sein. Bevorzugt handelt es sich um einen Methyl-, Ethyl-, Propyl- oder Trimethylolpropan-, substituierte oder nichtsubstituierte Aryl-, substituierte oder nichtsubstituierte Benzyl-, substituierte oder nichtsubstituierte Phenylester der Alkylphosphonsäure. Hierbei kommen insbesondere die nachfolgend genannten kommerziell erhältlichen Ester in Frage wie das 3-(Dimethylphosphono)-propionsäure-Methylolamid, erhältlich unter dem Markennamen Amgard CU von Rhodia Inc., bzw. AFLAMMIT KWB von THOR GmbH, Speyer, das Amgard CT von Rhodia Inc., bzw. AFLAMMIT PE conc von THOR GmbH, Speyer, das Amgard V 490 von Rhodia Inc., das AFLAMMIT TL 1002 von der THOR GmbH, Speyer, das Fyrol PMP von Akzo, das FRX 100 von FRX Polymers, das Levagard DMPP von Clariant und das Exolit OP 560 von Clariant. Gemäß einer weiteren allgemeinen Ausführungsform der Erfindung enthält die Phosphonatverbindung eine Phenylphosphonsäure z.B. Fyrol PMP, erhältlich von AkzoNobel oder FRX 100, erhältlich von FRX Polymers.

Gemäß einer Ausführungsform der Erfindung umfasst das Gemisch bzw. die erfindungsgemäße flammhemmende Zusammensetzung weiterhin einen oder mehrere Radikalbildner.

Unter dem Begriff Radikalbildner ist im Rahmen der vorliegenden Erfindung eine Verbindung zu verstehen, die in der Lage ist, auf chemischem bzw. physikalischem Wege eine radikalische Verbindung freizusetzen. Bevorzugt handelt es sich bei der radikalischen Verbindung dabei um ein Br-, Cl- bzw. H-Radikal. Ein solcher Radikalbildner ist beispielsweise eine Verbindung, die Brom und/oder Chlor und/oder Wasserstoff in Form des jeweiligen freien Radikals freisetzen kann. Gemäß einer bevorzugten Ausführungsform der Erfindung handelt es sich bei dem Radikalbildner um NH₄Br bzw. NH₄Cl. Es kann sich bei dem Radikalbildner sowohl um eine anorganische als auch um eine organische Verbindung handeln. Gemäß einer weiteren Ausführungsform der Erfindung kann es sich bei dem Radikalbildner um ein halogeniertes Flammschutzmittel handeln. Gemäß einer weiter bevorzugten Ausführungsform der Erfindung werden die 1,3,5-Triazinverbindungen (B) in Form ihrer Hydrobromide bzw. Hydrochloride eingesetzt.

Der Anteil des Radikalbildners bezogen auf die 1,3,5-Triazinverbindung(en) (B) kann über weite Bereiche variieren. Der Anteil wird allgemein so gewählt, dass pro Mol 1,3,5-Triazinverbindung 0,001 bis 1000 Mol, bevorzugt 0,01 bis 100 Mol, besonders bevorzugt 0,1 bis 10 Mol Radikale gebildet werden.

Gemäß einer Ausführungsform der Erfindung ist die in der flammhemmenden Zusammensetzung enthaltene 1,3,5-Triazinverbindung (B) Melamin, gemäß einer bevorzugten Ausführungsform der Erfindung in Kombination mit einem Radikalbildner.

Gemäß einer weiteren Ausführungsform der Erfindung ist die in der flammhemmenden Zusammensetzung enthaltene 1,3,5-Triazinverbindung (B) eine gehinderte Aminverbindung die unter dem Markennamen FLAMESTAB NOR 116 von Ciba, vertrieben wird. Dieses Flammschutzmittel ist in der EP 0 889 085 offenbart, deren Offenbarung durch Bezugnahme in der vorliegenden Anmeldung enthalten ist. Bei dem Flamestab NOR handelt es sich um eine oder mehrere Verbindung(en) ausgewählt aus der Gruppe

R₁NH-CH₂CH₂CH₂NR₂CH₂CH₂NR₃CH₂CH₂CH₂NHR₄ (I)

T-E₁-T₁ (II)

T-E₁ (IIA)

G-E₁-G₁-E₁-G₂ (III),

wobei in dem Tetraamin der Formel I
R₁ und R₂ die s-Triazineinheit E darstellen, und einer von R₃ und R₄ die s-Triazineinheit E darstellt, wobei der andere von R₃ und R₄ Wasserstoff darstellt,
E 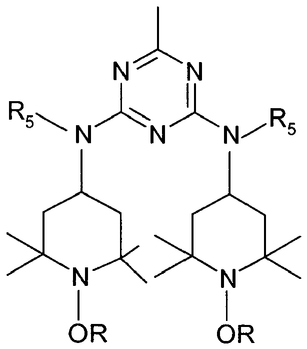 darstellt,
R Cyclohexyl darstellt,
R₅ Alkyl mit 1 bis 12 Kohlenstoffatomen darstellt,
worin in der Verbindung der Formel II oder IIA, wenn R Cyclohexyl darstellt,
T und T₁ jeweils ein Tetraamin substituiert mit R₁-R₄ wie für Formel I definiert, darstellen, worin
(1) eine von den s-Triazineinheiten E in jedem Tetraamin durch die Gruppe E₁ ersetzt ist, die eine Brüche zwischen zwei Tetraaminen T und T₁ bildet,
   E₁ 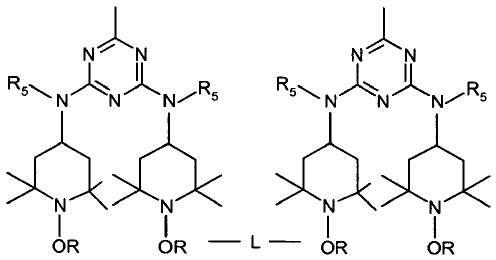 darstellt

Die vorstehend dargestellten gehinderte Aminverbindungen gemäß den Formeln I, II, IIA und III können ferner ein Gemisch von N,N',N"'-Tris{2,4-bis[(1-kohlenwasserstoffoxy-2,2,6,6-tetramethylpiperidin-4-yl)alkylamino]-s-triazin-6-yl} -3,3'-ethylendiiminodipropylamin;
N,N',N"-Tris {2,4-bis[(1-kohlenwasserstoffoxy-2,2,6,6-tetramethylpiperidin-4-yl)alkylamino]-s-triazin-6-yl}-3,3'-ethylendiiminodipropylamin enthalten.

Die Kombination der vorstehend definierten 1,3,5-Triazinverbindung(en) (Flamestab NOR™) mit dem Dimethylspirophosphonat (A) liefert eine synergistische Flammschutzzusammensetzung, die auch in geringen Einsatzmengen eine hohe Wirksamkeit zeigt.

Die synergistische Wirkung der erfindungsgemäßen flammhemmenden Zusammensetzung geht deutlich über die üblicherweise beobachtete additive Wirkung der Einzelkomponenten (A) und (B) hinaus. So zeigte sich überraschenderweise, dass durch den gleichzeitigen Einsatz der Komponenten (A) und (B) als flammhemmende Komponenten, diese zur flammhemmenden Ausrüstung von Kunststoffen in wesentliche geringeren Mengen eingesetzt werden können, als bei additiver Wirkung.

Eine flammhemmende Zusammensetzung enthaltend die Komponenten (A) und (B) in den nachfolgend angegebenen Gewichtsverhältnissen, wird nachstehend als "erfindungsgemäße flammhemmende Zusammensetzung" bezeichnet werden. Eine "erfindungsgemäße flammhemmende Zusammensetzung" kann neben den Komponenten A und B als flammhemmende Komponenten in den nachfolgend näher präzisierten Gewichtsverhältnissen ein oder mehrere weitere Bestandteile aufweisen. Der oder die weiteren Bestandteile können dabei eine flammhemmende Wirkung aufweisen, oder sie können keine flammhemmende Wirkung aufweisen, also etwa ein Additiv sein.

In einer weiteren Ausführungsform der Erfindung besteht die erfindungsgemäße flammhemmende Zusammensetzung im Wesentlichen aus den Komponenten (A) und B als flammhemmende Wirkkomponente, d.h., dass neben den Komponenten (A) und (B) wohl noch ein oder auch mehrere andere flammhemmende Komponenten enthalten sein können, diese aber in einer solchen Menge vorliegen, in der kein Beitrag des jeweiligen zum Gesamteffekt der entstehenden Mischung vorliegt. Wenn also die flammhemmende Wirkung einer erfindungsgemäßen flammhemmenden Zusammensetzung, die - neben den Komponenten (A) und (B) als wesentlichem Bestandteil - noch ein oder mehrere weitere flammhemmende Komponenten in untergeordneter bzw. geringfügiger Konzentration aufweist, nicht verändert ist gegenüber dem Einsatz der erfindungsgemäßen flammhemmenden Zusammensetzung, wird dieses im Zusammenhang mit der vorliegenden Erfmdung als "im Wesentlichen bestehend" bezeichnet.

In einer weiteren Ausführungsform kann die erfindungsgemäße flammhemmende Zusammensetzung aus den Komponenten (A) und (B) als einzigen flammhemmenden Komponenten bestehen. In einem solchen Fall ist es lediglich möglich, dass ein oder mehrere weitere Bestandteile ohne eine flammhemmende Wirkung vorhanden sind, etwa übliche Additive, die nachfolgend näher beschrieben sind.

Das Verhältnis (Gewichtsteile) der Verbindung(en) (A) zu der Verbindung bzw. den Verbindungen (B) ist so gewählt, dass ein Synergismus hinsichtlich der Flammschutzwirkung der beiden Komponenten vorliegt. Das Verhältnis in der Zusammensetzung liegt dabei zum Beispiel zwischen 1:100 bis 100:1, bevorzugt im Bereich von 1:10 bis 10:1, ganz besonders bevorzugt im Bereich von 3:7 bis 7:1. Die verwendete Menge an Komponente (A) und Komponente (B) hängt dabei auch von der Wirksamkeit der speziellen Verbindung(en) und dem speziellen Anwendungsgebiet ab.

Die erfindungsgemäße Zusammensetzung kann weiterhin Säurefänger umfassen. Säurefänger sind beispielsweise Hydrotalzite und amorphe basische Aluminiummagnesiumcarbonate wie jene, die in US 4,427,816 und US 5,234,981 beschrieben sind. Hydrotalzit ist auch als Hycid oder DHT4A bekannt. Die Hydrotalzite können natürlich oder synthetisch sein. Von dem natürlichen Hydrotalzit wird angenommen, dass es eine Struktur Mg₆Al₂(OH)₁₈CO₃ x 4H₂O besitzt.

Die erfindungsgemäße flammhemmende Zusammensetzung oder das Polymer, welches diese erfindungsgemäße flammhemmende Zusammensetzung enthält, kann weiterhin Additive enthalten. Eines dieser Additive sind beispielsweise Säurefänger, diese liegen in der Polymerzusammensetzung zum Beispiel mit einem Anteil von 0,1 bis 1,0 Gew.-%, bezogen auf das Gewicht der Polymerzusammensetzung, vor. Zum Beispiel liegen die vorliegenden Säurefänger mit 0,2 bis 0,8 oder 0,4 bis 0,6 Gew.-%, bezogen auf das Gewicht der Polymerzusammensetzung, vor.

Die Säurefänger unterstützen dabei die vorliegende Zusammensetzung in der Farbe, Geruch und Stabilität.

Die Polymere bzw. Polymerzusammensetzungen oder die flammhemmende Zusammensetzung gemäß der vorliegenden Erfindung können weiterhin zusätzlich Additive enthalten. Diese zusätzlichen Additive sind hauptsächlich aus der Gruppe der Wärmestabilisatoren und/oder Lichtstabilisatoren ausgewählt. Die thermische Stabilisierung umfasst dabei sowohl das Verarbeiten als auch die Anwendung (Langzeitstabilität). Derartige Additive sind dem Fachmann bekannt und die meisten davon kommerziell erhältlich. Geeignete Additive sind beispielsweise:
Antioxidantien wie
   alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methyl-phenol, 2,4,6-Tricyclohexylphenol, 2,6-Di-tert-butyl-4-methoxymethylphenol, Nonylphenole, die in den Seitenketten linear oder verzweigt sind, zum Beispiel 2,6-Di-nonyl-4-methylphenol, 2,4-Dimethyl-6-(1'-methylundec-1'-yl)-phenol, 2,4-Dimethyl-6-(l'-methylheptadec-1'-yl)phenol, 2,4-Dimethyl-6-(l'-methyltridec-l'-yl)phenol und Gemische davon.
Alkylthiomethylphenole, zum Beispiel 2,4-Dioctylthiomethyl-6-tert-butylphenol 2,4-Dioctylthiomethyl-6-methylphenol, 2,4-Dioctylthiomethyl-6-ethylphenol, 2,6- Didodecylthiomethyl-4-nonylphenol.
Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis-(3,5-di-tert-butyl-4-hydroxyphenyl)adipat.
Tocopherole, zum Beispiel α-Tocopherol, ß-Tocopherol, γ-Tocopherol, δ-Tocopherol und Gemische davon (Vitamin E).
Hydroxylierte Thiodiphenylether, zum Beispiel 2,2'-Thiobis(6-tert-butyl-4-methyl-phenol), 2,2'-Thio-bis(4-octylphenol), 4,4-Thiobis(6-tert-butyl-3-methylphenol), 4,4'-Thiobis(6-tert-butyl-2-methylphenol).
4,4'-Thiobis-(3,6-di-sec-amylphenol), 4 ,4'-Bis(2,6-dimethyl-4-hydroxyphenyl)di-sulfid. Alkylidenbisphenole, zum Beispiel 2,2'-Methylenbis(6-tert-butyl-4-methylphenol), 2,2'-Methylen-bis(6-tert-butyl-4-ethylphenol), 2,2'-Methytenbis[4-methyl-6-(α-methylcyclohexyl)-phenol), 2,2'-Methylen-bis(4-methyl-6-cyclohexyl)phenol), 2,2'-Methylenbis(6-nonyl-4-methylphenol), 2,2'-Methylen-bis(4,6-di-tert-butylphenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-diimethylbenzyl)-4-nonylphenol], 4,4'-Methylenbis(2,6-di-tert-butytphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxy-benzyl)-4-methylphenol, 1,1,3-Tris(5-tert-butyl-4-hydroxy-2-methylphenyl)butan, 1, 1-Bis-(5-tert-butyl-4-hydroxy-2-methylphenyl)-3-n-dodecylmercaptobutan, Ethylenglycolbis[3,3-bis-(3'-tert-butyl-4-hydroxyphenyl)-butyrat], Bis(3-tert-butyl-4-hydroxy-5-methylphenyl)dicyclopentadien, Bis[2-(3'-tert-butyl-2'-hydroxy-5'-methylbenzyl)-6-tert-butyl-4-methylphenyl]terephthalat, 1,1-Bis-(3,5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methyl phenyl)pentan.
O-, N- und S-Benzylverbindungen, zum Beispiel 3,5,3',5'-Tetra-tert-butyl-4,4'dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis-(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.
Hydroxybenzylierte Malonate, zum Beispiel Dioctadecyl-2,2-bis-(3,5-di-tert-butyl-2-hydroxybenzyl)malonat, Dioctadecyl-2-(3-tert-butyl-4-hydroxy-5-methylbenzyl)malonat, Didodecylmercaptoe-thyl-2,2-bis-(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat.
Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-d i-tert-butyl-4-hydroxybenzyl)phenol.
Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxy phenoxy)-1,3,5-triazin, 2,4,6-Tris-(3,5-di-tert-butyl-4-hydroxyphenoxy)-1,2,3-triazin, 1,3,5-Tris-(3,5-di-tert-butyl)-4-hydroxybenzyl)isocyanurat, 1,3,5-Tris(4-tert-butyl-3-hydroxy-2,6-dimethylbenzyl)isocyanurat, 2,4,6-Tris-(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)isocyanurat.
Benzylphosphonate, zum Beispiel Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphornat, das Caiciumsalz des Monoethylesters von 3,5-Di-tert-butyl-4-hydroxybenzylphosphonsäure.
Acylaminophenole, zum Beispiel 4-Hydroxylauranilid, 4-Hydroxystearanilid, Octyl-N-(3,5-di-tert-butyl-4-hydroxyphenyl)carbamat.
Ester von ß-(3,5-Di-tert-butyl-4-hydroxyphenyl)propionsäure mit ein- oder mehrwertigen Alkoholen, zum Beispiel mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxylethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phosphat-2,6,7-trioxabicyclo[2,2,2]octan.
Ester von ß-(5-tert-Butyl-4-hydroxy-3-methylphenyl)propionsäure mit ein- oder mehrwertigen Alkoholen, zum Beispiel mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
Ester von ß-(3,5-Dicyclohexyl-4-hydroxyphenyl)propionsäure mit ein- oder mehrwertigen Alkoholen, zum Beispiel mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Di ethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
Ester von 3,5-Di-tert-butyl-4-hydroxyhenylessigsäure mit ein- oder mehrwertigen Alkoholen, zum Beispiel mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis-(hydroxyethyl)-oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
Amide von ß-(3,5-Di-tert-butyl-4-hydroxyphenyl)propionsäure, zum Beispiel N,N'-Bis-(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl(-4-hydroxyphenylpropionyl)hydrazid, N.N'-Bis[2-[3-[3,5-di-tert-butyl-hydroxyphenyl]propionyloxy)ethylloxamid (Naugard® XL-1 vertrieben von Uniroyal).
Ascorbinsäure (Vitamin C).
Aminartige Antioxidanzien, zum Beispiel N,N'-Diisopropyl-p-phenylendiamin, N,N'-Disec-butyl-p-phenylendiamin, N,N'-Bis(1,4-dimethylpentyl)-p-phenylendiarnin, N,N'-Bis-(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N.N'-Dimethyl-N,N'-di-secbutyl-p-phenyleridiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis-(phenylamino)propan, (o-Tolyl)biguanid, Bis[4-(1',3'-dimethylbutyl)phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropy/lsohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-Bis(2,2,6,6-tetramethylpiperid-4-yl)-hexamethylendiamin) Bis(2,2,6,6-tetramethylpiperid-4-yl)sebacat, 2,2,6,6-Tetramethylpiperidin-4-on, 2,2,6,6-Tetramethylpiperidin-4-ol.
UV-Absorptionsmittel und Lichtstabilisatoren, wie
   2-(2-Hydroxyphenyl)benzotriazole, zum Beispiel bekannte kommerzielle Hydroxyphenyl-2H-benzotriazole und Benzotriazole, wie offenbart in den US-Patenten Nrn. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,553,242; 5,574,166; 5,607,987, 5,977,219 und 6,166,218, wie 2-(2-Hydroxy-5-methylphenyl)-2H-benzotriazol, 2-(3,5-Di-t-butyl-2-hydroxyphenyl)-2H-benzotriazol, 2-(2-Hydroxy-5-t-butylphenyl)-2H-benzotriazol, 2-(2-Hydroxy-5-t-octylphenyl)-2H-benzotriazol, 5-Chlor-2-(3,5-di-t-butyl-2-hydroxyphenyl)-2H-benzotriazol, 5-Chlor-2-(3-t-butyl-2-hydroxy-5-methylphenyl)-2H-benzotriazol, 2-(3-sec-Butyl-5-t-butyl-2-hydroxyphenyl)-2H-benzotriazol, 2-(2-Hydroxy-4-octyloxyphenyl)-2H-benzotriazol, 2-(3,5-Di-t-amyl-2-hydroxyphenyl)-2H-benzotriazol, 2-(3,5-Bis-α-cumyl-2-hydroxyphenyl)-2H-benzotriazol, 2-(3-t-Butyl-2-hydroxy-5-(2-(ω-hydroxy-octa-(ethylenoxy)carbonylethyl)phenyl)-2H-benzotriazol, 2-(3-Dodecyl-2-hydroxy-5-methylphenyl)-2H-benzotriazol, 2-(3-t-Butyl-2-hydroxy-5-(2-octy loxycarbonyl)ethylphenyl)-2H-benzotriazol, dodecyliertes 2-(2-Hydroxy-5-methylphenyl)-2H-b enzotriazol, 2-(3-t-Butyl-2-hydroxy-5-(2-octyloxycarbonylethyl)phenyl)-5-chlor-2H-benzotriazol, 2-(3-tert-Butyl-5-(2-(2-ethylhexyloxy)-carbonylethyl)-2-hydroxyphenyl)-5-chlor-2H-benzotriazol, 2-(3-t-Butyl-2-hydroxy-5-(2-methoxycarbonylethyl)phenyl)-5-chlor-2H-benzotriazol, 2-(3-t-Butyl-2-hydroxy-5-(2-methoxycarbonylethyl)phenyl)-2H-benzotriazol, 2-(3-t-Butyl-5-(2-(2-ethylhexyloxy)carbonylethyl)-2-hydroxyphenyl)-2H-benzotriazol, 2-(3-t-Butyl-2-hydroxy-5-(2-isooctyloxycarbonylethyl)-phenyl-2H-benzotriazol, 2,2'-Methylen-bis(4-t-otyl-(6-2H-benzotriazol-2-yl)phenol), 2-(2-Hydroxy-3-α-cumyl-5-t-octylphenyl)-2H-benzotriazol, 2-(2-Hydroxy-3-t-octyl-5-α-cumylphenyl)-2H-benzotriazol, 5-Fluor-2-(2-hydroxy-3,5-di-α-cumylphenyl)-2H-benzotriazol, 5-Chlor-2-(2-hydroxy-3,5-di-α-cumylphenyl)-2H-benzotriazol, 5-Chlor-2-(2-hydroxy-3-α-cumyl-5-t-octylphenyl)-2H-benzotriazol, 2-(3-t-Butyl-2-hydroxy-5-(2-isooctyloxycarbonylethyl)phenyl)-5-chlor-2H-benzotriazol, 5-Trifluormethyl-2-(2-hydroxy-3-α-cumyl-5-t-octylphenyl)-2H-benzotriazol, 5-Trifluormethyl-2-(2-hydroxy-5-t-octylphenyl)-2H-benzotriazol, 5-Trifluormethyl-2-(2-hydroxy-3,5-di-t-octyllphenyl)-2H-benzotriazol, Methyl-3-(5-trifluormethyl-2H-benzotriazol-2-yl)-5-t-butyl-4-hydroxyhydrocinnamat, 5-Butylsulfonyl-2-(2-hydroxy-3-α-cumyl-5-t-octylphenyl)-2H-benzotriazol, 5-Trifluormethyl-2-(2-hydroxy-3-α-cumyl-5-t-butylphenyl)-2H-benzotriazol, 5-Trifluormethyl-2-(2-hydroxy-3,5-di-t-butylphenyl)-2H-benzotriazol, 5-Trifluormethyl-2-(2-hydroxy-3,5-di-α-cumylphenyl)-2H-benzotriazol, 5-Butylsulfonyl-2-(2-hydroxy-3,5-di-t-butylphenyl)-2H-benzotriazol und 5-Phenylsulfonyl-2-(2-hydroxy-3,5-di-t-butylphenyl)-2H-benzotriazol.
2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.
Ester von substituierten und unsubstituierten Benzoesäuren, wie 4-tert-Butylphenylsalicylat, Phenylsalicylat, Octylphenylsalicylat, Dibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-bu-tyl-4-hydroxybenzoat.
Acrylate, zum Beispiel Ethyl-α-cyano-ß,ß-diphenylacrylat, Isooctyl-α-cyano-ß,ß-diphenylacrylat, Methyl-α-carbomethoxycinnamat, Methyl-α-cyano-ß-methyl-p-methoxycinnamat, Butyl-α-cyano-ß-methyl-p-methoxycinnamat, Methyl-α-carbomethoxy-p-methoxycinnamat und N-(ß-Carbomethoxy-ß-cyanovinyl)-2-methylindolin.
Nickelverbindungen, zum Beispiel Nickelkomplexe von 2,2'-Thio-bis-[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze von den Monoalkylestern, zum Beispiel dem Methyl- oder Ethylester, von 4-Hydroxy-3,5-di-tert-butylbenzylphosphonsäure, Nickelkomplexe von Ketoximen, zum Beispiel von 2-Hydroxy-4-methylphenylundecylketoxim, Nickelkomplexe von 1-Phenyl-4-lauroyl-5-hydroxypyrazol, mit oder ohne zusätzliche Liganden.
Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4piperidyl)sebacat, Bis(1,2,2,6,6-pentamethyl-4-piperidyl)-n-butyl-3,5-di-tert-butyl-4-hydroxybenzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetra-kis(2,2,6,6-tetramethyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethylpiperidyl)sebacat, Bis(1-octyloxy-2,2,6,6-tetramethylpiperidyl)succinat, lineare oder cyclische Kondensate von N.N'-Bis-2,2,6,6-tetramethyl-4-piperidyl)hexamethylendiamin und 4-Morpholino-2,6-dichlor-1,3,5-triazin, die Kondensate von 2-Chlor-4,6-bis(4-n-butylamino-2,2,6,6-tetramethylpiperidyl)-1,3,5-triazin und 1,2-Bis(3-aminopropylamino)ethan, die Kondensate von 2-Chlor-4,6-di-(4-n-butylamino-1,2,2,6,6-penta-methylpiperidyl)-1,3,5-triazin und 1,2-Bis-(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, ein Gemisch von 4-Hexadecyloxy- und 4-Stearyloxy-2,2,6,6-tetramethylpiperidin ein Kondensationsprodukt von N,N'-Bis(2,2,6,6-tetramethyl-4-piperidyl)hexamethylendiamin und 4-Cyclohexylamino-2,6-dichlor-1,3,5-triazin, ein Kondensationsprodukt von 1,2-Bis(3-aminopropylamino)ethan und 2,4,6-Trichlor-1,3,5-triazin sowie 4-Butylamino-2,2,6,6-tetramethylpiperidin (CAS Reg. Nr. [136504-96-6]); N-(2,2,6,6-Tetramethyl-4-piperidyl)-n-dodecylsuccinimid, N-(1,2,2,6,6-Pentamethyl-4-piperidyl)-n-dodecylsuccinimid, 2-Undecyl-7,7,9,9-tetramethyl-1-oxa-3,8-diaza-4-oxo-spiro[4,5]decan, ein Reaktionsprodukt von 7,7,9,9-Tetramethyl-2-cycloundecyl-1-oxa-3,8-diaza-4-oxospiro[4,5]decan und Epichlorhydrin, 1,1-Bis(1,2,2,6,6-pentamethyl-4-piperidyloxycarbonyl)-2-(4-methoxyphenyl)ethen, N,N'-Bis-formyl-N,N'-bis(2,2,6,6-tetramethyl-4-piperidyl)hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-copolymer mit 2,2,6,6-Tetramethyl-4-aminopiperidin oder 1,2,2,6,6-Pentamethyl-4-aminopiperidin.
Oxamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und sein Gemisch mit 2-Ethoxy-2'-ethyl-5,4'-di-tert-butoxanilid, Gemische von o- und p-Methoxy-disubstituierten Oxaniliden und Gemischen von o- und P-Ethoxy-disubstituierten Oxaniliden.
2-(2-Hydroxyphenyl)-1,3,5-triazine, zum Beispiel bekannte kommerzielle Trisaryl-o-hydroxyphenyl-s-triazine und Triazine, wie offenbart in WO 96/28431 and US-Pat. Nrn. 3,843,371; 4,619956; 4,740,542; 5,096,489; 5,106,891; 5,298,067; 5,300,414; 5,354,794; 5,461,151; 5,476,937; 5,489503; 5,543,518; 5,556,973; 5,597,854; 5,681,955; 5,726,309; 5,736,597; 5,942,626; 5,959,008; 5,998,116; 6,013,704; 6,060,543; 6,187,919; 6,242,598 and 6,255,483, zum Beispiel 4,6-Bis-(2,4-dimethylphenyl)-2-(2-hydroxy-4-octyloxyphenyl)-s-triazin, Cyasorb® 1164, Cytec Corp., 4,6-Bis(2,4-dimethylphenyl)-2-(2,4-dihydroxyphenyl)-s-triazin, 2,4-Bis(2,4-dihydroxyphenyl)-6-(4-chlorphenyl)-s-triazin, 2,4-Bis[2-hydroxy-4-(2-hydroxyethoxy)phenyl]-6-(4-chlorphenyl)-s-triazi n, 2,4-Bis[2-hydroxy-4-(2-hydroxy-4-(2-hydroxyethoxy)phenyl]-6-(2,4-dimethylphenyl)-s-triazin, 2,4-Bis[2-hydroxy-4-(2-hydroxyethoxy)phenyl]-6-(4-bromphenyl)-s-triazin, 2,4-Bis[2-hydroxy-4-(2-acetoxyethoxy)-phenyl]-6-(4-chlorphenyl)-s-triazin, 2,4-Bis(2,4-dihydroxyphenyl)-6-(2,4-dimethylphenyl)-s-triazin, 2,4-Bis(4-biphenylyl)-6-(2-hydroxy-4-octyloxycarbonylethylidenoxyphenyl)-s-triazin, 2-Phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazin, 2,4-Bis(2,4-dimethylphenyl)-6-[2-hydroxy-4-(3-benzyloxy-2-hydroxypropyloxy)phenyl]-s-triazin, 2,4-Bis(2-hydroxy-4-n-butyloxyphenyl)-6-(2,4-di-n-butyloxyphenyl)-s-triazin, 2,4-Bis(2,4-dimethylphenyl)-6-[2-hydroxy-4-(3H-nonyloxy*-2-hydroxypropyloxy)-5-α-cumylphenyl]-s-triazin (* bedeutet ein Gemisch von Qctyloxy-, Nonyloxy- und Decyloxygruppen), Methylenbis{2,4-bis(2,4-dimethylphenyl)-6-[2-hydroxy-4-(3-butyloxy-2-hydroxypropoxy)phenyl)-s-triazi n}, Methylen-verbrücktes Dimergemisch, verbrückt in den 3:5', 5:5' und 3:3'-Positionen in einem Verhältnis von 5:4:1,2,4,6-Tris(2-hydroxy-4-isooctyloxycarbonylisopropylidenoxyphenyl)-s-triazin, 2,4-Bis(2,4-dimethylphenyl)-6-(2-hydroxy-4-hexyloxy-5-α-cumylphenyl)-s-triazin, 2-(2,4,6-Trimethylphenyl)-4,6-bis[2-hydroxy-4-(3-butyloxy-2-hydroxypropyloxy)phenyl]-s-triazin, 2,4,6-Tris[2-hydroxy-4-(3-sec-butyloxy-2-hydroxypropyloxy)phenyl]-s-triazin, Gemisch von 4 , 6-Bis-(2,4-dimethylphenyl)-2-(2-hydroxy-4-(3-dodecyloxy-2-hydroxypropoxy)-phenyl)-s-triazin und 4,6-Bis-(2,4-dimethylphenyl)-2-(2-hydroxy-4-(3-tridecyloxy-2-hydroxypropoxy)-phenyl)-s-triazin, Tinuvin® 400, Ciba Specialty Chemicals Corp., 4,6-Bis-(2,4-dimethylphenyl)-2-(2-hydroxy-4-(3-(2-ethylhexyloxy)-2-hydroxypropoxy)-phenyl)-s-triazin und 4,6-Diphenyl-2-(4-hexyloxy-2-hydroxyphenyl)-s-triazin. Metalldesaktivatoren, zum Beispiel N,N'-Diphenyloxamid, N-Salicylal-N'salicyloylhydrazin, N,N'-Bis(saliceloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis(salicyloyl)thiopropionyldihydrazid.
Phosphitc und Phosphonite, zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentacrythritdiphosphit, Bis(2,4-di-tert-butylphe-nyl)pentaerythritdiphosphit, Bis(2,6-di-tcrt-butyl-4-methylphenyl)-pentaerythritdiphosphit, Diisodecyloxypcntaerythritdiphosphit, Bis(2,4-di-tert-butyl-6-methylphenyl)pentaerythritdiphosphit, Bis(2,4,6-tris(tert-butylphenyl)pentaerythritdiphosphit, Tristearylsorbittriphosphit, Tetrakis(2,4-di-tert-butylphenyl)-4,4'-biphenylen-di-phosphonit, 6-lsooctyloxy-2,4,8,10-tetra-tert-butyl-12H-dibenz[d,g]-1,3,2-dioxaphosphocin, 6-Fluor-2,4,8,1 0-tetra-tert-butyl-12-methyldibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 2,2',2"-Nitrilo[triethyl-tris(3,3',5,5'-tetra-tert-butyl-1,1'biphenyl-2,2'-diyl)phosphit, 2-Ethylhexyl(3,3'5,5'.tetra-tert-butyl-1,1'biphenyl-2,2'-diyl)phosphit.
Besonders bevorzugt sind die nachstehenden Phosphite: Tris(2,4-di-tert-butylphenyl)phosphit (Irgafos® 168, Ciba-Geigy), Tris(nonylphenyl)phosphit. 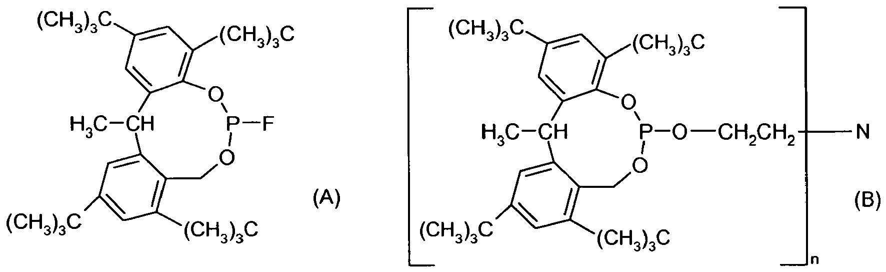 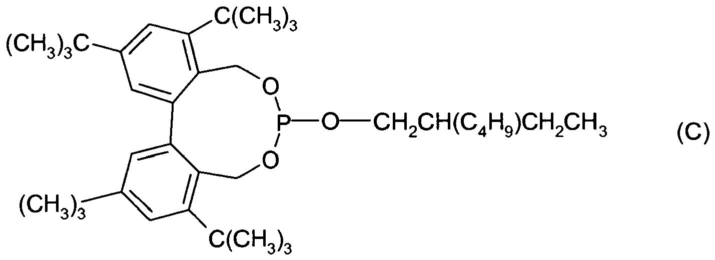 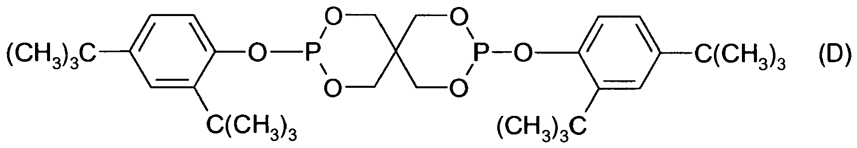 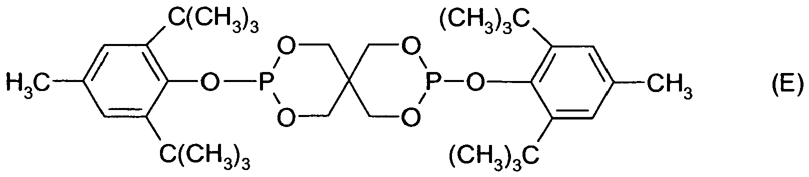 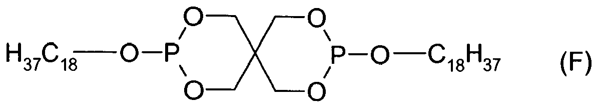 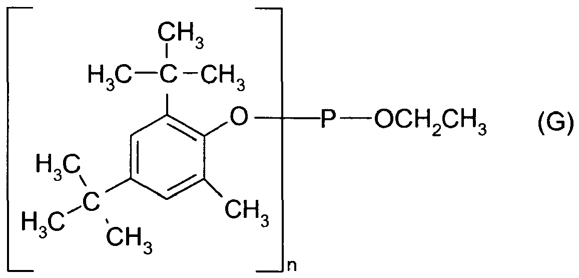
Hydroxylamine, zum Beispiel N,N-Dibenzylhydroxylarnin, N,N-Diethylhydroxylamin, N,N-Dioetylhydroxylamin, N,N-Dilaurylhydroxylamin, N,N-Ditetradecylhydraxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin, abgeleitet von hydriertem Talgamin.
Nitrone, zum Beispiel N-Benzyl-α-phenylnitron, N-Ethyl-α-methylnitron, N-Octyl-α-heptylnitron, N-Lauryl-α-undecyl-nitron, N-Tetradecyl-α-tridecyl-nitron, N-Hexadecyl-α-pentadecylnitron, N-Octadecyl-α-heptadecylnitron, N-Hexadecyl-α-heptadecylnitron, N-Octadecyl-α-pentadecylnitron, N-Heptadecyl-α-heptadecylnitron, N-Octadecyl-o-hexadecylnitron, Nitron, abgeleitet von N,N-Dialkylhydroxylamin, abgeleitet von hydriertem Talgamin.
Thiosynergisten, zum Beispiel Dilaurylthiodipropionat oder Distearylthiodipropionat. Peroxid-Fänger, zum Beispiel Ester von β-Thiodipropionsäure, zum Beispiel die Lauryl-, Stearyl-, Myristyl- oder Tridecylester, Mercaptobenzimidazol oder das Zinksalz von 2-Mercaptobenzimidazol, Zinkdibutyl-dithiocarbamat, Dioctadecyldisulfid, Pentaerythrit-tetrakis(ß-dodecylmercapto)propionat. Polyamidstabilisatoren, zum Beispiel Kupfersalze in Kombination mit Iodiden und/oder Phosphorverbindungen und Salze von zweiwertigem Mangan.
Basische Costabilisatoren, zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze von höheren Fettsäuren, zum Beispiel Calciumstearat, Zinkstearat, Magnesiumbehenat, Magnesiumstearat, Natriumricinoleat und Kaliumpalmitat, Antimonbrenzcatechinat oder Zinnbrenzcatechinat.
Keimbildungsmittel, zum Beispiel anorganische Substanzen, wie Talkum, Metalloxide, wie Titandioxid oder Magnesiumoxid, Phosphate, Carbonate oder Sulfate von vorzugsweise Erdalkalimetallen; organische Verbindungen, wie Monooder Polycarbonsäuren und die Salze davon, zum Beispiel 4-tert-Butylbenzoesäure, Adipinsäure, Diphenylessigsäure, Natriumsuccinat oder Natriumbenzoat; Polymerverbindungen, wie ionische Copolymere (lonomere).
Füllstoffe und Verstärkungsmittel, zum Beispiel Calciumcarbonat, Silikate, Glasfasern, Glashohlkugeln, Asbest, Talkum, Kaolin, Glimmer, Bariumsulfat, Metalloxide und -hydroxide, Ruß, Graphit, Holzmehl und Mehle oder Fasern von anderen Naturprodukten, Synthesefasern.
Weitere Additive, zum Beispiel Weichmacher, Schmiermittel, Emulgatoren, Pigmente, Rheologieadditive, Katalysatoren, Fließsteuerungsmittel, optische Aufheller, Antistatika, Treibmittel und Tropfinhibitoren.
Benzofuranone und Indolinone, zum Beispiel jene offenbart in US-Pat. Nm. 4,325,863; 4, 338,244; 5,175,312; 5,216,052; 5,252,643; DE-A 43 16 611; DE-A 43 16 622; DE-A 43 16 876; EP-A 0 589 839 oder EP-A 0 591 102 oder 3-[4-(2-Acetoxyethoxy)-phenyl]-5,7-di-tert-butylbenzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzofuran-2-on, 3-(3,4-Dimethylphenyl)-5,7-di-tert-butylbenzofuran-2-on, 3-(2,3-Dimethylphenyl)-5,7-di-tert-butylbenzofuran-2-on.
Geeignete Schmiermittel sind zum Beispiel: Montanwachs, Fettsäureester, PE-Wachse, Amidwachse, Polyolteilester, teilweise verseifte PE-Wachse, sogenannte Komplexesterchlorparaffine, Glycerinester, Erdalkalimetallseifen oder Fettketone, wie in DE 42 04 887 beschrieben. Geeignete Schmiermittel werden auch in "Taschenbuch der Kunststoffadditive", Hrsg. R. Gächter und H. Müller, Hanser Verlag, 3. Ausgabe, 1990, Seiten 443-503, beschrieben. Andere Schmiermittelausführungsformen, insbesondere Kombinationen von Schmiermitteln, werden in EP 0 062 813 und EP 0 336 289 gefunden.

Die vorliegende Zusammensetzung kann zusätzlich anderes UV-Absorptionsmittel, ausgewählt aus der Gruppe, bestehend aus den s-Triazinen, den Oxaniliden, den Hydroxybenzophenonen, Benzoaten und den α-Cyanoacrylaten, enthalten. Insbesondere kann die vorliegende Zusammensetzung zusätzlich eine wirksam stabilisierende Menge von mindestens einem weiteren 2-Hydroxyphenyl-2H-benzotriazol, einem weiteren Trisaryl-s-triazin oder gehindertem Amin oder Gemischen davon enthalten. Zum Beispiel sind zusätzliche Komponenten ausgewählt aus Pigmenten, Farbstoffen, Weichmachern, Antioxidanzien, thixotropen Mitteln, Nivellierhilfen, basischen Co-Stabilisatoren, weiteren Lichtstabilisatoren, wie UV-Absorptionsmitteln und/oder sterisch gehinderten Aminen, Metallpassivatoren, Metalloxiden, Organophosphorverbindungen, Hydroxylaminen und Gemischen davon, insbesondere Pigmenten, phenolischen Antioxidantien, Calciumstearat, Zinkstearat, Phosphit- und Phosphonitstabilisatoren, Benzofuranstabilisatoren, UV-Absorptionsmitteln von den 2-(2'-Hydroxyphenyl)benzotriazol- und 2-(2-Hydroxyphenyl)-1,3,5-triazin-Klassen und sterisch gehinderten Aminen.

Die vorliegende Erfindung betrifft ferner die Verwendung der erfindungsgemäßen flammhemmenden Zusammensetzung zur flammhemmenden Ausrüstung von Polymeren bzw. Polymerblends. Das Polymer bzw. das Polymersubstrat kann dabei ein beliebiges aus einer großen Vielzahl von Polymerarten einschließlich Polyolefinen, Polyestern, Polyamiden, ABS-Polymeren sein. Besonders bevorzugt sind die Polymere Polypropylen, Polyethylen, thermoplastisches Olefin (TPO), ABS sowie schlagfestes Polystyrol; insbesondere bevorzugt sind Polypropylen, Polyethylen und thermoplastisches Olfein (TPO), thermoplastische Polyurethan-Elastomere (TPU), Polyvinylchlorid (PVC), Polyvinylacetat (PVA), Ethyl-Vinylacetat (EVA), Polyesterharze (UP-Harze), Polyharnstoffe und Polyurethane.

Die wirksame flammverzögernde Menge der erfindungsgemäßen flammhemmenden Zusammensetzung ist jene, die benötigt wird, um eine flammverzögernde Wirksamkeit zu zeigen, wird durch eines der Standardverfahren gemessen, die zum Bewerten von Flammverzögerung verwendet werden. Diese schließen die NFPA 701-Standardverfahren zur Brandprüfung für flammwidrige Textilien und Folien 1989 und 1996er Ausgabe; den Elektro-UL 94-Test für die Entflammbarkeit von Kunststoffmaterialien für Teile in Vorrichtungen und Geräten, 5. Ausgabe, 29. Oktober 1996, begrenzender Sauerstoffindex, Limiting Oxygen Index (LOI), ASTM-D2863 und Cohen Calorimetry ASTM E-1354 ein. Ferner können die Normen für Gebäude (DIN4102B1) und für Kraftfahrzeuge (MVSS 302) zur Untersuchung der flammhemmenden Eigenschaften der erfindungsgemäßen flammhemmenden Zusammensetzung angewandt werden.

Die vorliegende Erfindung betrifft somit auch eine flammhemmende Zusammensetzung, die umfasst:
(a) ein Polymer sowie
(b) eine wirksame flammhemmende Menge der erfindungsgemäßen synergistischen flammhemmenden Zusammensetzung.

Die wirksame flammhemmende Menge der erfindungsgemäßen flammhemmenden Zusammensetzung beträgt zweckdienlicherweise 0,1 bis 60 Gew.-%, bevorzugt 0,5 bis 30 Gew.-%, besonders bevorzugt 1 bis 10 Gew.-%, bezogen auf das Polymer.

Die die erfindungsgemäßen flammhemmenden Zusammensetzungen enthaltenden flammhemmenden Polymere können durch bekannte Verfahren, zum Beispiel durch Vermischen der angeführten Additive und wahlweise weiteren Additive mit dem Polymer unter Verwendung von Ausrüstungen, wie Kallandern, Mischern, Knetern, Extrudern und dergleichen hergestellt werden. Die Additive können einzeln oder in Anmischungen miteinander zugesetzt werden. Es ist auch möglich, sogenannte Masterbatche zu verwenden. In solchen Vorgängen kann beispielsweise das Polymer in Form von Pulvern, Granulaten, Lösungen, Suspensionen oder in Form von Latices verwendet werden. Die somit erhaltenen flammhemmend ausgerüsteten Polymerzusammensetzungen können durch bekannte Verfahren in die gewünschte Form gebracht werden. Solche Verfahren sind zum Beispiel Kallandrieren, Extrudieren, Spritzguss, Sprühbeschichten, Rakelbeschichten, Spinnen, Kompressionsschmelzen, Rotationsgießen, Thermoformen oder Extrusionsblasen. Das fertige flammhemmend ausgerüstete Polymer kann auch zu geschäumten Gegenständen verarbeitet werden.

Die hiermit hergestellten Polymergegenstände sind beispielsweise Fasern, Filme bzw. Folien, Formgegenstände und geschäumte Formkörper.

Die erfindungsgemäßen Additive und wahlweise weitere Komponenten können zu dem Polymermaterial einzeln oder vermischt miteinander zugegeben werden. Falls erwünscht, können die einzelnen Komponenten vor der Einarbeitung in das Polymer, zum Beispiel durch Trockenvermischen, Verdichtung oder in der Schmelze miteinander vermischt werden.

Gemäß einer weiteren Ausführungsform betrifft die Erfindung ein Verfahren, um einem Polymer flammhemmende Eigenschaften zu verleihen, wobei das Verfahren die Zugabe der Komponenten (A) (einer oder mehrere Diphosphonatverbindung(en)) und (B) (einer oder mehrerer 1,3,5-Triazinverbindung(en)) zu dem Polymer umfasst. Die wirksame flammhemmende Menge der Komponenten (A) und (B) ist dabei diejenige, die benötigt wird, um flammhemmende Wirksamkeit nachzuweisen, wie mit Hilfe eines der vorstehend beschriebenen Standardverfahren gemessen werden kann. Die nachstehenden Beispiele sind nur für Erläuterungszwecke vorgesehen und nicht, um den Umfang der Erfindung in irgendeiner Weise zu begrenzen. Wenn nicht anders angegeben, bedeutet Raumtemperatur eine Temperatur im Bereich von 20 bis 25 °C. Prozentsätze sind auf das Gewicht des Polymersubstrats bezogen, sofern nicht anders angegeben.

Die nachstehenden Beispiele verdeutlichen die Erfindung.

Zur Veranschaulichung der Erfindung werden Polyethylenfolien hergestellt, die mit unterschiedlichen flammhemmenden Zusammensetzungen versetzt waren:

### 1. Herstellung der Pulvermischungen:

Eine genaue Menge an Polyethylenpulver, Pallmann 500/1 Extruder und Pulvermischungen der Flammschutzmittel gemäß Beispielen 1 bis 23 (zum Beispiel 98 g Polymer und 2 g Flammschutzmittel) werden vermengt und mit Hilfe eines Labormischers homogenisiert. Die Pulvermischungen werden 2 Stunden bei 80 °C getrocknet.

### 2. Herstellung der Folien:

Die Herstellung der Folien erfolgt auf einem Einschneckenextruder 19/25D der Fa. Brabender bei einer Massentemperatur von 210 °C und einer Drehzahl, bei der maximal 50 % des Drehmoments erreicht werden.

Die Pulvermischungen gemäß den Beispielen 1 bis 23 werden dabei manuell über einen Trichter zugeführt. Als Werkzeug dient ein Breitbanddüsenkopf 100 x 0,5 mm, das Abzugsband wird so eingestellt, dass eine Folienbreite von 90 mm und eine Dicke von 0,20 mm erreicht werden. Die Abkühlung erfolgt an der Luft.

### 3. Beurteilung der Wirksamkeit:

Um die Wirkung der Flammschutzmittel zu überprüfen, werden an den gemäß 2. hergestellten Folien folgende Prüfungen durchgeführt:
- Bestimmung des LOI-Wertes nach DIN ISO 4589 auf einem LOI-Testgerät der Fa. Raczek.
- Brennprüfung nach DIN 53438 Teil 3.

Zu diesem Zwecke werden Prüfkörper mit den Maßen 230 mm x 90 mm hergestellt. Diese werden dann vertikal in einer Brennkammer eingespannt. Die Erflammung erfolgt auf der Fläche mit einer Flammhöhe von 20 mm und einem Flammungswinkel von 45°. Anmerkung: Diese DIN entspricht der DIN 4102-B2, sofern die obere Messmarke des Brennprobenkörpers von der Flammenspitze nicht erreicht wird bzw. diese von selbst erlischt.

### Vergleichsbeispiele 0 und 1

98 g Polyethylenpulver und 0 beziehungsweise 2 g Dimethylspirophosphonat werden nach obigem Verfahren homogen vermischt. Aus dieser Mischung wurde eine ausreichende Menge an Folien hergestellt, um die notwendigen Flammschutzprüfungen durchzuführen.

### Beispiele 3 bis 10, 12 bis 13, 15 bis 17, 19 und 21 bis 23, 25 und Vergleichsbeispiele 2, 11, 14, 18, 20, 24, 26 und 27

Die Beispiele bzw. Vergleichsbeispiele 2 bis 25 werden auf die gleiche Weise durchgeführt, die Ergebnisse der Beispiele und Vergleichsbeispiele 0 bis 25 sind in folgender Tabelle zusammengefasst.

| Bsp. | Pallmann 500-1 | DMSP * | EAP** | MP*** | NOR 116 | Melamin | Domus BM 41 | Melamin -cyanurat | PPM -Triazin | THEIC | LOI (%) | Einbrenntiefe (mm) |
|---|---|---|---|---|---|---|---|---|---|---|---|---|
| 0 | 100 | - | - | - | - | - | - | - | - | - | 22,0 | Brennt ab |
| 1 | 98 g | 2 g | - | - | - | - | - | - | - | - | 25 | Brennt ab |
| 2 | 98g | - | - | - | 2 g | - | - | - | - | - | 25 | Brennt ab |
| 3 | 98 g | 1 g | - | - | 1 g | - | - | - | - | - | 28,5 | 100 |
| 4 | 98 g | 0,5 g | - | - | 1,5 g | - | - | - | - | - | 29,2 | 80 |
| 5 | 98 g | 1,5 g | - | - | 0,5 g | - | - | - | - | - | 29,9 | 70 |
| 6 | 98,5 g | 1 g | - | - | 0,5 g | - | - | - | - | - | 28,0 | 80 |
| 7 | 98,7 g | 1 g | - | - | 0,3 g | - | - | - | - | - | 27,5 | 100 |
| 8 | 98 g | - | 2 g | - | - | - | - | - | - | - | 29 | 70 |
| 9 | 98 g | - | 1,5 g | - | 0,5 g | - | - | - | - | - | 33 | 55 |
| 10 | 98,7 g | - | 1 | - | 0,3 | - | - | - | - | - | 30,5 | 60 |
| 11 | 98 g | - | - | 2 | - | - | - | - | - | - | 26,5 | Brennt ab |
| 12 | 98 g | - | - | 1,5 | 0,5 | - | - | - | - | - | 30,5 | 90 |
| 13 | 98,7 g | - | - | 1 | 0,3 | - | - | - | - | - | 29,0 | 95 |
| 14 | 98 g | - | - | - | - | 2g | - | - | - | - | 23,7 | Brennt ab |
| 15 | 98 g | 1 g | - | - | - | 1 g | - | - | - | - | 28,0 | 100 |
| 16 | 98 g | 1,5 g | - | - | - | 0,5 g | - | - | - | - | 29,3 | 90 |
| 17 | 98,7 g | 1 g | - | - | - | 0,3 g | - | - | - | - | 26,9 | 110 |
| 18 | 98 g | - | - | - | - | - | 2 g | - | - | - | 23,5 | Brennt ab |
| 19 | 98 g | 1 g | - | - | - | - | 1 g | - | - | - | 28,7 | 100 |
| 20 | 98,7 g | 1 g | - | - | - | - | 0,3 g | - | - | - | 27,0 | 110 |
| 21 | 98 g | - | - | - | - | - | - | 2 g | - | - | 23,4 | Brennt ab |
| 22 | 98 g | 1 g | - | | - | - | - | 1 g | - | - | 25,9 | 120 |
| 23 | 98,7 | 1 g | - | - | - | - | - | 0,3 g | - | - | 25,1 | 125 |
| 24 | 98 | - | - | - | - | - | - | - | 2 g | - | 23,2 | Brennt ab |
| 25 | 98,5 | 1 g | - | - | - | - | - | - | 0,5 g | - | 26,8 | 110 |
| 26 | 98,5 g | 1 g | - | - | - | - | - | - | - | 0,5 | 27,5 | 130 |
| 27 | 98,0 g | - | - | - | - | - | - | - | - | 2,0 | 25 | Brennt ab |

| | | | | | | | | | | | | |
|---|---|---|---|---|---|---|---|---|---|---|---|---|
| DMSP*: Dimethylspirophosphonat EAP**: Ethylendiaminmethanphosphonat MP***: Melaminmethanphosphonat Domus HM 41™: Melaminhydrobromid ppm-Triazin™: Poly-[2,4-(piperazin-1,4-yl)-6-(morpholin-4-yl]-1,3,5triazin. THEIC: Tris-2-hydroxyethylisocyanurat NOR 116: FLAMESTAB NOR 116 von Ciba | | | | | | | | | | | | |

Wie den in Tabelle 1 dargestellten Ergebnissen hervorgeht, zeigen die gemäß den Vergleichsbeispielen 1, 2, 11, 14, 18, 21, 24 und 27 hergestellten Folien bei den Brennprüfungen keine zufrieden stellenden Ergebnisse. Anhand der Ergebnisse der Beispiele 3 bis 10, 12 bis 13, 15 bis 17, 19 und 21 bis 26 wird deutlich, dass die vorliegende Erfindung synergistische Flammschutzmittel bereitstellt, die sogar beim Einsatz in verringerter Konzentration gegenüber dem Einsatz der Einzelkomponenten flammhemmend wirksam sind.

Beispielhaft soll dies anhand der Vergleichsbeispiele 1 und 2 und der Beispiele 3 bis 7 verdeutlicht werden. Während der Einsatz des DMSP (Vergleichsbeispiel 1) bzw. NOR 116 (Vergleichsbeispiel 3), jeweils in 2 gew.-%igem Anteil zu einem LOI-Wert von 25 führt, so führt der Einsatz von jeweils 1 Gew.-% zu einem Anstieg des LOI-Wertes auf einen Wert von 28,5 (Beispiel 3). Auch die Verringerung einer einzelnen Komponente, des NOR 116 in Beispiel 7 führt noch zu einem LOI-Wert von 27,5, der deutlich oberhalb der Werte der Vergleichsbeispiele 1 und 2 (jeweils LOI = 25) liegt. Hieraus wird deutlich, dass es sich um eine synergistische Flammschutzzusammensetzung handelt.

Die Menge an Flammschutzmittel bezogen auf das fertige Polymercompound, die nötig ist, um den LOI der jeweiligen Einzelsubstanz zu erreichen, kann durch Verwendung der synergistischen Flammschutzzusammensetzung deutlich verringert werden. Durch Verwendung der synergistischen Zusammensetzung lassen sich somit auch, aufgrund des geringeren Anteils an Flammschutzmittel, dünnwandige Formmassen oder Vliese herstellen, die die geforderte Brandklasse erfüllen.

## Patentansprüche

1. Gemisch enthaltend eine synergistische Mischung von (A) und (B) mit den nachfolgenden Bedeutungen:
(A) ist eine Verbindung oder ein Gemisch von 2 oder mehreren Verbindungen der Gruppen
a) einer oder mehrerer Phosphonatverbindung(en) der Formel 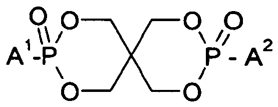 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen, und
b) Alkyl-Phosphonsäuren, wobei Alkyl- eine geradkettige oder Verzweigte Alkylgruppe mit 1 bis 4 Kohlenstoffatomen darstellt, sowie ein Salz beziehungsweise Ester der vorstehend genannten Phosphonsäure, und
c) Aryl-Phosphonsäuren, wobei Aryl- ein substituiertes oder nicht substituiertes Phenyl darstellt, sowie ein Salz beziehungsweise Ester der vorstehend genannten Phosphonsäure, und
(B) eine 1,3,5-Triazinverbindung oder ein Gemisch von zwei oder mehreren 1,3,5-Triazinverbindung(en) ausgewählt gehinderten Aminverbindungen der Formeln I, II, IIA und III:
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III),
wobei in dem Tetraamin der Formel I
R₁ und R₂ die s-Triazineinheit E darstellen, und einer von R₃ und R₄ die s-Triazineinheit E darstellt, wobei der andere von R₃ und R₄ Wasserstoff darstellt,
E 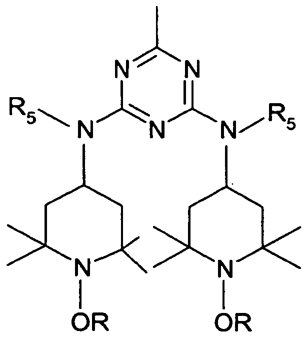
darstellt,
R Methyl, Cyclohexyl oder Octyl darstellt,
R₅ Alkyl mit 1 bis 12 Kohlenstoffatomen darstellt,
worin in der Verbindung der Formel II oder IIA, wenn R Cyclohexyl oder Octyl darstellt,
T und T₁ jeweils ein Tetraamin substituiert mit R₁-R₄ wie für Formel I definiert, darstellen, worin
(1) eine von den s-Triazineinheiten E in jedem Tetraamin durch die Gruppe E₁ ersetzt ist, die eine Brücke zwischen zwei Tetraaminen T und T₁ bildet, oder
(2) die Gruppe E₁ beide Enden im Gleichen Tetraamin T aufweisen kann, wie in der Formel IIA, bei der zwei der E-Reste des Tetraamins durch eine E₁-Gruppe ersetzt sind, oder
(3) sämtliche drei s-Triazinsubstituenten des Tetraamins T E₁ bedeuten können, so dass ein Rest E₁ die Verbindung zwischen T und T₁ herstellt und der zweite Rest E₁ beide Enden im Tetraamin T aufweist,
und
E₁ 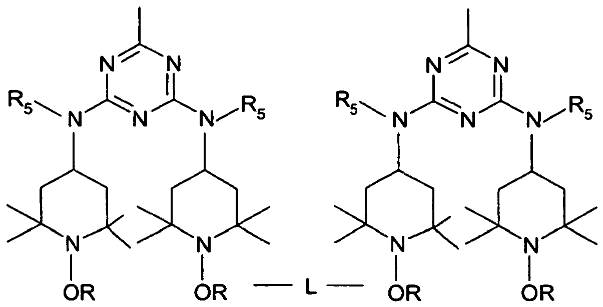 darstellt.

2. Gemisch nach Anspruch 1, wobei die Phosponatverbindung eine Verbindung der nachfolgenden Formel 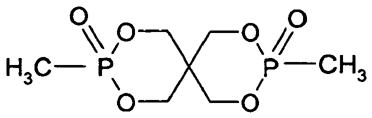 ist.

3. Gemisch nach Anspruch 1 oder 2, ferner umfassend N,N',N"'-Tris{2,4-bis[(1-kohlenwasserstoffoxy-2,2,6,6-tetramethylpiperidin-4-yl)alkylamino]-s-triazin-6-yl}-3,3'-ethylendiiminodipropylamin und
N,N',N"-Tris {2,4-bis[(1-kohlenwasserstoffoxy-2,2,6,6-tetramethylpiperidin-4-yl)alkylamino]-s-triazin-6-yl}-3,3'-ethylendiiminodipropylamin.

4. Gemisch nach einem der Ansprüche 1 bis 3, wobei die Phosphonatverbindung(en) (A) und die bzw. die 1,3,5-Triazinverbindung(en) (B) im Verhältnis 1:100 bis 100:1 zueinander vorliegen.

5. Flammhemmende Zusammensetzung enthaltend ein Gemisch nach einem der Ansprüche 1 bis 4, sowie gegebenenfalls eine oder mehrere weitere Komponente(n) ausgewählt aus Pigmenten, Farbstoffen, Weichmachern, Antioxidantien, phenolischen Antioxidantien, thixotropen Mitteln, Egalisierungshilfen, basischen CoStabilisatoren, Nitronstabilisatoren, Aminoxidstabilisatoren, Benzofuranonstabilisatoren, UV-Absorptionsmitteln, sterisch gehinderten Aminen, Metallpassivatoren, Metalloxiden, Hydroxylaminen, Tropfverhinderern, Calciumstearat, Zinkstearat, Phosphit- und Phosphonitstabilisatoren, Benzofuranonstabilisatoren, UV-Absorptionsmitteln von dem 2-(2'-Hydroxyphenyl)benzotriazol und 2-(2-Hydroxyphenyl)-1,3,5-triazinklassen, sterisch gehinderten Aminen und Radikalbildnern sowie Gemischen davon.

6. Verwendung der flammhemmenden Zusammensetzung nach Anspruch 5 zur flammhemmenden Ausrüstung von Polymeren.

7. Verwendung nach Anspruch 6, wobei die Polymere ausgewählt sind aus Polyolefinen, Polyestern, Polyamiden, ABS-Polymeren sein. Besonders bevorzugt sind die Polymere Polypropylen, Polyethylen, thermoplastisches Olefin (TPO), ABS sowie schlagfestes Polystyrol; insbesondere bevorzugt sind Polypropylen, Polyethylen und thermoplastisches Olefin (TPO), thermoplastische Polyurethan-Elastomere (TPU), Polyvinylchlorid (PVC), Polyvinylacetat (PVA), Ethyl-Vinylacetat (EVA), Polyesterharze (UP-Harze), Polyharnstoffe und Polyurethane oder Mischungen zweier oder mehrerer sind.

8. Verwendung nach Anspruch 6 oder 7, wobei die Komponenten (A) und (B) unabhängig voneinander jeweils in einer Konzentration von 1 bis 30 Gew.-%, bezogen auf das Polymer, eingesetzt werden.

9. Flammhemmend ausgerüstete Polymerformmasse enthaltend eine flammhemmende Zusammensetzung gemäß Anspruch 5.

10. Verfahren zur Verleihung von flammhemmenden Eigenschaften an ein Polymer, wobei das Verfahren die Zugabe von
a) einer oder mehrerer Phonatverbindung(en) nach Anspruch 1, und
b) einer oder mehrerer 1,3,5-Triazinverbindung(en)
nach Anspruch 1 zu dem Polymer umfasst.

11. Verfahren nach Anspruch 10, ferner umfassend die Zugabe eines Radikalbildners.

12. Polymer, enthaltend eine flammhemmende Zusammensetzung nach Anspruch 5.

13. Polymer gemäß Anspruch 12, ausgewählt aus Polyolefinen, Polyestern, Polyamiden, ABS-Polymeren, Polypropylen, Polyethylen, thermoplastischem Olefin (TPO), schlagfesten Polystyrol, Polypropylen, Polyethylen, thermoplastischen Polyurethan-Elastomeren (TPU), Polyvinylchlorid (PVC), Polyvinylacetat (PVA), Ethyl-Vinylacetat (EVA), Polyesterharzen (UP-Harze), Polyharnstoffen und Polyurethanen oder Mischungen zweier oder mehrerer.

14. Gegenstände die das Polymer gemäß Anspruch 12 oder 13 enthalten, ausgewählt aus Fasern, Filmen, Folien, Formgegenstände und geschäumten Formkörpern.

## Claims

1. A blend containing a synergistic mixture of (A) and (B), which denote the following:
(A) is a compound or a mixture of 2 or more chemical compounds selected from the group consisting of
a) one or more phosphonate compound(s) of the Formula 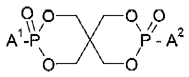 where A¹ and A² independently denote a substituted or unsubstituted, straight or branched chain alkyl group having 1 to 4 carbon atoms, substituted or unsubstituted benzyl, substituted or unsubstituted phenyl, or substituted or unsubstituted Naphthyl, and
b) alkylphosphonic acids, where alkyl denotes a straight or branched chain alkyl group having 1 to 4 carbon atoms, or a salt or ester of the aforementioned phosphonic acid, and
c) arylphosphonic acids, where aryl denotes a substituted or unsubstituted phenyl, or a salt or ester of the aforementioned phosphonic acid, and
(B) a 1,3,5-triazine compound or a mixture of two or more 1,3,5-triazine compound(s) selected from tris-2-hydroxyethyl isocyanurate, melamine, melamine cyanurate, melamine phosphate, poly-[2,4-(piperazin-1,4-yl)-6-(morpholin-4-yl)-1,3,5-triazine], dimelamine phosphate, melamine pyrophosphate, and hindered amine compounds of Formula I, II, IIA, and III:
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III),
where in the tetraamine of Formula I
R₁ and R₂ denote the s-triazine moiety E, and one of R₃ and R₄ denotes the s-triazine moiety E, with the other of R₃ or R₄ denoting a hydrogen,
E denotes 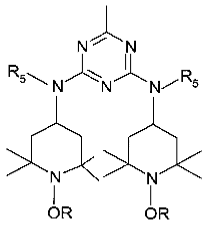 R denotes methyl, cyclohexyl or octyl,
R₅ denotes an alkyl having 1 to 12 carbon atoms,
wherein the compound of Formula II or IIA, if R denotes cyclohexyl or octyl, each of T and T₁ denotes a tetraamine substituted by R₁-R₄ as defined in Formula I, where
(1) one of the s-triazine moieties E in each tetraamine is replaced by the group E₁, which forms a bridge between two tetraamines T and T₁, or
(2) the group E₁ can have both terminals in the same tetraamine T as in Formula IIA, where two of the E moieties of the tetraamine are replaced by one E₁ group, or
(3) all three s-triazine substituents of tetraamine T can denote E₁, such that one E₁ residue comprises the bond between T and T₁ and a second E₁ residue has both terminals in tetraamine T,
and E₁ denotes

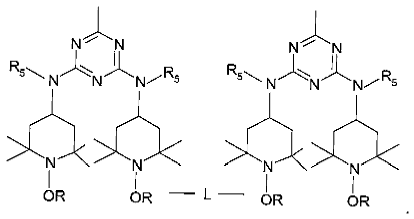

2. The blend as claimed in claim 1, in which the phosphonate compound is a compound of the following Formula

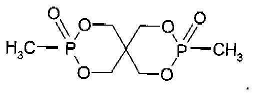

3. The blend as claimed in claim 1 or 2, further comprising N,N',N"'-tris{2,4-bis [(1-hydrocarbyloxy-2,2,6,6-tetramethylpiperidin-4-yl) alkylamino]-s-triazin-6-yl}-3,3'-ethylenediiminodipropylamine and N,N',N"-tris-{2,4-bis [(1-hydrocarbyloxy-2,2,6,6-tetramethylpiperidin-4-yl) alkylamino]-s-triazin-6-yl}-3,3'-ethylenediiminodipropylamine.

4. The blend as claimed in one of claims 1 to 3, in which the phosphonate compound(s) (A) and the 1,3,5-triazine compound(s) (B) are in a ratio of 1 : 100 to 100 : 1.

5. A flame-retardant composition comprising a mixture as claimed in one of claims 1 to 4, and if applicable, one or more further component(s) selected from the group consisting of pigments, colorants, softeners, antioxidants, phenolic antioxidants, thixotropic agents, leveling auxiliaries, basic co-stabilizers, nitrone stabilizers, amine oxide stabilizers, benzofuran stabilizers, UV-absorbing agents, sterically hindered amines, metal deactivators, metal oxides, hydroxylamines, drop inhibitors, calcium stearate, zinc stearate, phosphite and phosphonite stabilizers, benzofuranone stabilizers, UV-absorbing agents of the 2-(2'-hydroxyphenyl)benzotriazole and 2-(2-hydroxyphenyl)-1,3,5-triazine classes, sterically hindered gamines and radical formers, and mixtures thereof.

6. The use of the flame-retardant composition as claimed in claim 5 for flame-retardant finishing of polymers.

7. The use as claimed in claim 6, in which the polymers are selected from polyolefins, polyesters, polyamides, and ABS-polymers. Highly preferred polymers are polypropylene, polyethylene, thermoplastic olefin (TPO), ABS, and high-impact polystyrene; particularly preferred polymers are polypropylene, polyethylene, and thermoplastic olefins (TPO), thermoplastic polyurethane elastomers (TPU), polyvinylchloride (PVC), polyvinyl acetate (PVA), ethyl vinyl acetate (EVA), polyester resins (UP-Resins), polyureas and polyurethanes or mixtures of two or more thereof.

8. The use as claimed in claim 6 or 7, in which the components (A) and (B) are applied independently in a concentration of 1 to 30% by weight with respect to the polymer.

9. A flame-retardant polymer molding compound comprising a flame-retardant composition as claimed in claim 5.

10. A process for imparting flame-retardant properties to a polymer, said process comprising the addition to the polymer of
a) one or more phosphonate compound(s) as claimed in claim 1, and
b) one or more 1,3,5-triazine compound(s) as claimed in claim 1.

11. The process as claimed in claim 10, further comprising the addition of a radical former.

12. A polymer, containing a flame-retardant composition as claimed in claim 5.

13. The polymer as claimed in claim 12, selected from polyolefins, polyesters, polyamides, ABS-polymers, polypropylene, polyethylene, thermoplastic olefin (TPO), high-impact polystyrene, polypropylene, polyethylene, thermoplastic polyurethane elastomers (TPU), polyvinyl chloride (PVC), polyvinyl acetate (PVA), ethyl-vinyl acetate (EVA), polyester resins (UP-Resins), polyureas, and polyurethanes or mixtures of two or more thereof.

14. Articles containing the polymer as claimed in claim 12 or 13, selected from fibers, films, foils, molded objects, and foamed molding products.

## Revendications

1. Mélange contenant un mélange synergique de (A) et (B) ayant les significations suivantes :
(A) est un composé ou un mélange de 2 composés ou plus choisis dans les groupes constitués par
a) un ou plusieurs composé(s) phosphonate de formule 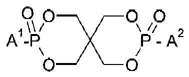 dans laquelle A¹ et A² représentent, indépendamment l'un de l'autre, un groupe alkyle substitué ou non substitué, à chaîne droite ou ramifiée, ayant de 1 à 4 atomes de carbone, benzyle substitué ou non substitué, phényle substitué ou non substitué, naphtyle substitué ou non substitué, et
b) des acides alkyl-phosphoniques, alkyl-représentant un groupe alkyle à chaîne droite ou ramifiée ayant de 1 à 4 atomes de carbone, ainsi qu'un sel ou ester de l'acide phosphonique mentionné précédemment, et
c) des acides aryl-phosphoniques, aryl- représentant un groupe phényle substitué ou non substitué, ainsi qu'un sel ou ester de l'acide phosphonique mentionné précédemment, et
(B) une composé 1,3,5-triazine ou un mélange de deux composés 1,3,5-triazine ou plus choisis parmi des composés de type amine à empêchement stérique de formules I, II, IIA et III :
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E_{1.}-G₂ (III),
dans la tétramine de formule I
R₁ et R₂ représentant l'unité triazine-s E, et l'un des radicaux R₃ et R₄ représentant l'unité triazine-s E, l'autre des radicaux R₃ et R₄ représentant un atome d'hydrogène,
E représentant 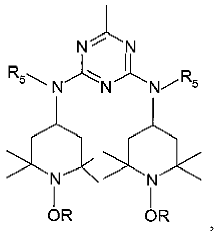 R représentant le groupe méthyle, cyclohexyle ou octyle,
R₅ représentant un groupe alkyle ayant de 1 à 12 atomes de carbone,
où dans le composé de formule II ou IIA, lorsque R représente le groupe cyclohexyle ou octyle,
T et T₁ représentent chacun une tétramine substituée par R₁-R₄ tels que définis pour la formule I, où
(1) l'une des unités triazine-s E dans chaque tétramine est remplacée par le groupe E₁, qui forme un pont entre deux tétramines T et T₁, ou
(2) le groupe E₁ peut constituer les deux extrémités dans la même tétramine T, comme dans la formule IIA, dans laquelle deux des radicaux E de la tétramine sont remplacés par un groupe E₁, ou
(3) l'ensemble des trois substituants triazine-s de la tétramine T peuvent représenter E₁, de sorte qu'un radical E₁ fait la liaison entre T et T₁ et le deuxième radical E₁ constitue les deux extrémités dans la tétramine T,
et
E₁ représente

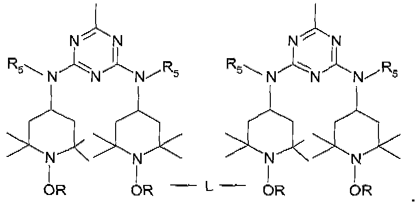

2. Mélange selon la revendication 1, dans lequel le composé phosphonate est un composé de formule suivante

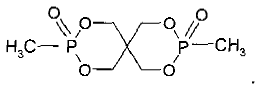

3. Mélange selon la revendication 1 ou 2, comprenant en outre de la N,N',N'''-tris{2,4-bis[(1-hydrocarbyloxy-2,2,6,6-tétraméthylpipéridin-4-yl)-alkylamino]-s-triazin-6-yl}-3,3'-éthylènediiminodipropylamine et de la N,N',N''-tris{2,4-bis[(1-hydrocarbyloxy-2,2,6,6-tétraméthylpipéridin-4-yl)-alkylamino]-s-triazin-6-yl}-3,3'-éthylènediiminodipropylamine.

4. Mélange selon l'une quelconque des revendications 1 à 3, dans lequel le(s) composé(s) phosphonate (A) et le ou les composé(s) 1,3,5-triazine (B) sont présents en un rapport entre eux de 1:100 à 100:1.

5. Composition ignifugeante contenant un mélange selon l'une quelconque des revendications 1 à 4, ainsi qu'éventuellement un ou plusieurs autres composant(s) choisis parmi des pigments, des colorants, des plastifiants, des antioxydants, des antioxydants phénoliques, des agents de thixotropie, des adjuvants d'unisson, des co-stabilisants basiques, des stabilisants nitrone, des stabilisants amine-oxyde, des stabilisants benzofuranone, des absorbeurs UV, des amines à empêchement stérique, des passivateurs de métaux, des oxydes métalliques, des hydroxylamines, des agents anti-goutte, le stéarate de calcium, le stéarate de zinc, des stabilisants phosphite et phosphonite, des absorbeurs UV des classes 2-(2'-hydroxyphényl)-benzotriazole et 2-(2-hydroxyphényl)-1,3,5-triazine et des générateurs de radicaux ainsi que des mélanges de ceux-ci.

6. Utilisation de la composition ignifugeante selon la revendication 5, pour le traitement ignifugeant de polymères.

7. Utilisation selon la revendication 6, dans laquelle les polymères sont choisis parmi les polyoléfines, polyesters, polyamides, polymères ABS. De façon particulièrement préférée, les polymères sont le polypropylène, le polyéthylène, une oléfine thermoplastique (TPO), l'ABS ainsi que le polystyrène choc ; on préfère en particulier le polypropylène, le polyéthylène et une oléfine thermoplastique (TPO), les élastomères polyuréthane thermoplastiques (TPU), le poly(chlorure de vinyle) (PVC), le poly(acétate de vinyle) (PVA), le copolymère éthylène/acétate de vinyle (EVA), les résines polyester (résines UP), les polyurées et les polyuréthanes ou des mélanges de deux de ceux-ci ou plus.

8. Utilisation selon la revendication 6 ou 7, dans laquelle les composants (A) et (B) sont utilisés chacun, indépendamment l'un de l'autre, à une concentration de 1 à 30 % en poids, par rapport au polymère.

9. Matière à mouler polymère à traitement ignifugeant, contenant une composition ignifugeante selon la revendication 5.

10. Procédé pour conférer des propriétés ignifuges à un polymère, le procédé comprenant l'addition au polymère
a) d'un ou plusieurs composé(s) phosphonate selon la revendication 1, et
b) d'un ou plusieurs composé(s) 1,3,5-triazine selon la revendication 1.

11. Procédé selon la revendication 10, comprenant en outre l'addition d'un générateur de radicaux.

12. Polymère, contenant une composition ignifugeante selon la revendication 5.

13. Polymère selon la revendication 12, choisi parmi les polyoléfines, les polyesters, les polyamides, les polymères ABS, le polypropylène, le polyéthylène, une oléfine thermoplastique (TPO), le polystyrène choc, les élastomères polyuréthane thermoplastiques (TPU), le poly(chlorure de vinyle) (PVC), le poly(acétate de vinyle) (PVA), le copolymère éthylène/acétate de vinyle (EVA), les résines polyester (résines UP), les polyurées et les polyuréthanes ou des mélanges de deux de ceux-ci ou plus.

14. Articles qui contiennent le polymère selon la revendication 12 ou 13, choisis parmi des fibres, des films, des feuilles, des articles mis en forme et des corps moulés expansés.
